Europäisches Patentamt

(19) European Patent Office

Office européen des brevets

(11) **EP 0 793 585 B1**

(12) **EUROPEAN PATENT SPECIFICATION**

(45) Date of publication and mention
of the grant of the patent:
**23.02.2000 Bulletin 2000/08**

(51) Int Cl.⁷: **B60R 1/02**

(86) International application number:
**PCT/IB95/01115**

(21) Application number: **95937153.5**

(22) Date of filing: **24.11.1995**

(87) International publication number:
**WO 96/16838 (06.06.1996 Gazette 1996/26)**

(54) **METHODS AND APPARATUS FOR AUTOMATING THE ADJUSTMENT OF REARVIEW MIRRORS**

VERFAHREN UND VORRICHTUNG ZUM AUTOMATISCHEN EINSTELLEN VON RÜCKSPIEGELN

PROCEDE ET APPAREIL POUR L'AUTOMATISATION DU REGLAGE DES RETROVISEURS

(84) Designated Contracting States:
**AT BE CH DE ES FR GB IT LI NL SE**

(30) Priority: **25.11.1994 US 348092**
**10.01.1995 US 370753**
**07.06.1995 US 475909**
**07.06.1995 US 475910**

(43) Date of publication of application:
**10.09.1997 Bulletin 1997/37**

(73) Proprietor: **Brandin, Bertil A.**
**80469 München (DE)**

(72) Inventor: **Brandin, Bertil A.**
**80469 München (DE)**

(74) Representative: **Sunderland, James Harry et al**
**HASELTINE LAKE PARTNERS**
**Motorama Haus 502**
**Rosenheimer Strasse 30**
**81669 München (DE)**

(56) References cited:
**EP-A- 0 287 993      DE-A- 3 138 712**
**DE-C- 3 406 286      US-A- 4 625 329**

• **PATENT ABSTRACTS OF JAPAN, Vol. 8, No. 54, M-282; & JP,A,58 206 441 (KANTOU JIDOUSHIYA KOGYO K.K.), 1 December 1983.**
• **PATENT ABSTRACTS OF JAPAN, Vol. 11, No. 213, M-605; & JP,A,62 031 540 (HONDA MOTOR CO LTD.), 10 February 1987.**
• **PATENT ABSTRACTS OF JAPAN, Vol. 12, No. 105, M-681; & JP,A,62 234 754 (NEC HOME ELECTRONICS LTD.), 15 October 1987.**
• **PATENT ABSTRACTS OF JAPAN, Vol. 12, No. 171, M-700; & JP,A,62 286 855 (FUJITSU TEN LTD.), 12 December 1987.**
• **PATENT ABSTRACTS OF JAPAN, Vol. 14, No. 319, M-996; & JP,A,02 106 452 (OMRON TATEISI ELECTRON CO.), 18 April 1990.**
• **PATENT ABSTRACTS OF JAPAN, Vol. 9, No. 107, M-378; & JP,A,59 230 838 (NIPPON JIDOSHA BUHIN SOGO KENKYUSHO), 25 December 1984.**
• **PATENT ABSTRACTS OF JAPAN, Vol. 15, No. 65, M-1082; & JP,A,02 293 229 (KENTARO SHIODA), 4 December 1990.**

## Description

## FIELD OF THE INVENTION

This invention relates to the methods and apparatus for adjusting rearview mirrors of vehicles.

## BACKGROUND OF THE INVENTION

Most motor vehicles (cars and trucks) have rearview mirrors. In some countries, only one central inside mirror is required by law, but in many countries, it is mandatory to have three rearview mirrors: a central inside mirror, and one outside rearview mirror on each side of the vehicle.

For driving comfort and safety reasons, it is essential to ensure that rearview mirrors are oriented correctly, to give the driver a clear view of the road behind him. Mirror orientation depends upon the position of the driver's head during driving. Drivers with longer upper bodies tend to hold their heads at a higher level relative to the rearview mirror. Likewise, drivers with longer legs tend to position the driver's seat farther back to attain a comfortable driving position. Rearview mirrors are therefore typically mounted to a vehicle in adjustable mountings, to enable drivers of various body proportions to orient them correctly.

When the same motor vehicle is driven by a number of drivers having different body proportions, for example family members, rental car users, fleet drivers, etc., it becomes necessary for each driver to readjust the orientation of the rearview mirrors, if the vehicle has been previously driven by a driver with different body proportions.

In the case of a motor vehicle having only one central rearview mirror, it is relatively easy for the driver to adjust the rearview mirror orientation. When the motor vehicle also has a driver's side mirror, the adjustment becomes more complicated and time consuming, especially if it is necessary to roll down the window to set the mirror. In the case of most modern vehicles, it is possible to set the driver's side rearview mirror from inside the vehicle by manually operating a lever or switch, but this is one operation which drivers would prefer not to perform.

In the case of vehicles having a third rearview mirror located on the passenger side of the vehicle, it becomes necessary for the driver to move to the passenger seat, open the window, and adjust the mirror, in the case of vehicles not equipped with an inside adjustment mechanism. Even in the case of vehicles which have an adjustment device on the inside of the passenger door, it is necessary for the driver to lean over the passenger seat to operate the device. In both cases, the mirror setting becomes a trial and error procedure, which takes time, since the driver must judge the results of his adjustment efforts by sitting upright in the driver's seat. It is unlikely that the driver will obtain the correct mirror orientation in his first attempt.

In the case of vehicles having electric or electronic controls located on the driver's side of the vehicle for adjusting both outside mirrors, the process of frequently adjusting three rearview mirrors remains a nuisance.

Mirror systems able to memorize mirror positions, typically allow a limited number of users (2-3) to store the corresponding settings, and require the adjustment of all mirrors before storing their positions. Furthermore, such settings may often require further adjustments, since the posture of any one driver may change from time to time, again making the process of adjusting rearview mirrors a nuisance.

There is accordingly a need for methods and apparatus for further automating the adjustment of rearview mirrors. These methods and apparatus are particularly useful in the case of vehicles being shared by drivers with different body proportions, different driving postures and habits.

EP-A-0 287 993 discloses a method and device for determining the position of the eyes or head of a vehicle driver, for example for use in enabling projection of a virtual "head up" display onto an appropriate position on the vehicle windscreen, or for appropriately setting anti-dazzle means. The method and device use rear-view mirror position in the determination of the position of the eyes or head. The position of an exterior rear-view mirror of the vehicle can be set in dependence upon the detected position of an interior rear-view mirror of the vehicle. For this purpose there may be used stored values or predetermined algorithms for deriving the position to be set for the exterior mirror. The stored values may be fixedly predetermined, driver-independent values, or values determined for an individual driver in a previously effected "learning mode". Structural, driver-independent features of the vehicle may be taken into account in the derivation of the position to be set for the exterior mirror. The head and/or eye position of the driver may be derived from the detected position of the interior mirror and the driver-independent structural features, or from the positions of the interior and exterior mirrors.

## SUMMARY OF THE INVENTION

According to the present invention there is provided an apparatus and a method in accordance with claims 1 and 14.

Further aspects and developments of the invention are set out in the other claims.

## BRIEF DESCRIPTION OF THE DRAWINGS

The invention will now be described, with reference to the following drawings, in which:

Figure 1 is a schematic top plan view of a vehicle equipped with mirror adjustment apparatus made in accordance with a preferred embodiment of the subject invention;

Figure 2 is a diagram of the components of the preferred embodiment;

Figure 3 is a flow chart of a program for the control means shown in Figure 2;

Figure 4 is a schematic top plan view of an alternative embodiment of the invention;

Figure 5 is a schematic top plan view of a second alternative embodiment of the subject invention;

Figure 6 is a schematic top plan view of a third alternative embodiment of the subject invention;

Figure 7 is a schematic top plan view of a fourth alternative embodiment of the subject invention;

Figure 8 is a schematic diagram of apparatus which may be used to implement the methods of the subject invention; and

Figure 9 is a vector diagram illustrating one embodiment of the subject method.

## DETAILED DESCRIPTION OF THE PREFERRED EMBODIMENTS

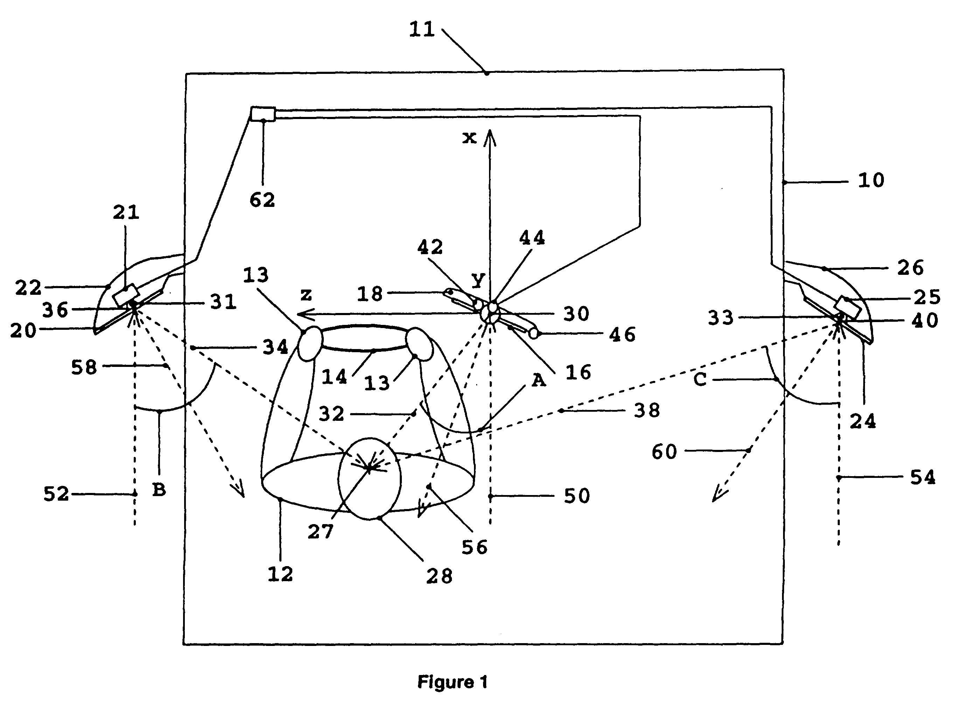

Figure 1 illustrates vehicle 10 incorporating a preferred embodiment of the subject invention. Driver 12 with hands 13 is shown positioned in a driving position behind steering wheel 14. Central inside mirror 16 is mounted on vehicle 10 in a central mirror mount 18. Left outside rearview mirror 20 is mounted in left mirror housing 22 located below the lower front end of the driver's side window. Right outside rearview mirror 24 is mounted in right outside mirror housing 26 located outside the lower front end of the passenger's side window.

The location of driver's eyes 27 is modelled as the location of one cyclopic eye positioned at the point about which the driver's head 28 pivots when the driver 12 observes an image in one of the three mirrors 16, 20 and 24.

In the coordinate system shown in Figure 1, the origin of the coordinate system is at the center point 30 of central mirror 16, the X axis points forward along the longitudinal axis of vehicle 10, the Y axis is vertical, pointing up, and the Z axis points transversely to the left. Vector 32 is the vector between the center point 30 of central mirror 16 and the driver's eyes 27. Vector 34 is the vector between the center point 36 of left mirror 20 and the driver's eyes 27. Vector 38 is the vector between the center point 40 of right mirror 24 and the driver's eyes 27.

In the preferred embodiment, the subject apparatus comprises location means, control means, and mirror positioning means. The location sensing means comprises a distance sensor 42, an orientation detector 44, and a switch 46. The control means comprises a microcomputer 62. The mirror positioning means comprise servomechanisms 21 and 25.

Distance sensor 42, typically an infrared or ultrasound sensor, is located on the mirror mount 18 of central mirror 16. Distance sensor 42 determines the distance between the central mirror 16 and the driver's eyes 27. Central mirror orientation detector 44 is located on mirror mount 18, and detects the orientation of central mirror 16 after it has been manually adjusted by driver 12. Orientation detector 44 may comprise a two degree of freedom electro-mechanical rotational-position sensing device able to detect the rotation of the central mirror 16 in the Y axis and in a rotational axis orthogonal to the Y axis. Switch 46 located on mirror mount 18 activates distance sensor 42, and orientation detector 44. Alternatively, switch 46 could activate microcomputer 62 to receive signals from distance sensor 42 and orientation detector 44.

Servomechanisms 21, 25 for positioning mirrors 20 and 24 are located within the respective mirror housings 22, 26. Each of servomechanism 21, 25 may comprise a pair of servomotors coupled together and rotatable about orthogonal axes, mechanically coupled to mirrors 20, 26 by linkages 31, 33. Each servomotor may comprise an electric motor and a position sensor such as a potentiometer coupled to the shaft of the motor. The rotation of servomotors results in the rotation of mirrors 20, 24.

Central mirror 16 is regarded to be set correctly when light ray 50 is reflected in the direction of the driver's eyes 27 after hitting the center point 30 of mirror 16. This correct setting is defined by unit vector 56, which is the directional vector normal to the plane of mirror 16. Likewise, mirrors 20, 24 are considered to be set correctly as defined by unit vectors 58 and 60 respectively, which are the directional vectors normal to the planes of the mirrors 20, 24, when light rays 52, 54 are reflected in the direction of the driver's eyes 27 after hitting the center points 36, 40 of mirrors 20, 24. Light rays 50, 52 and 54 represent desired reflected sightlines. In general, they are horizontal rays of light parallel to the longitudinal axis of vehicle 10, typically in the form of unit vectors. However, these light rays could be rays from other directions necessary to achieve a desired field of view for rearview vision purposes. Typically the direction of light rays 50, 52 and 54 would be determined by the vehicle's manufacturer for each particular vehicle.

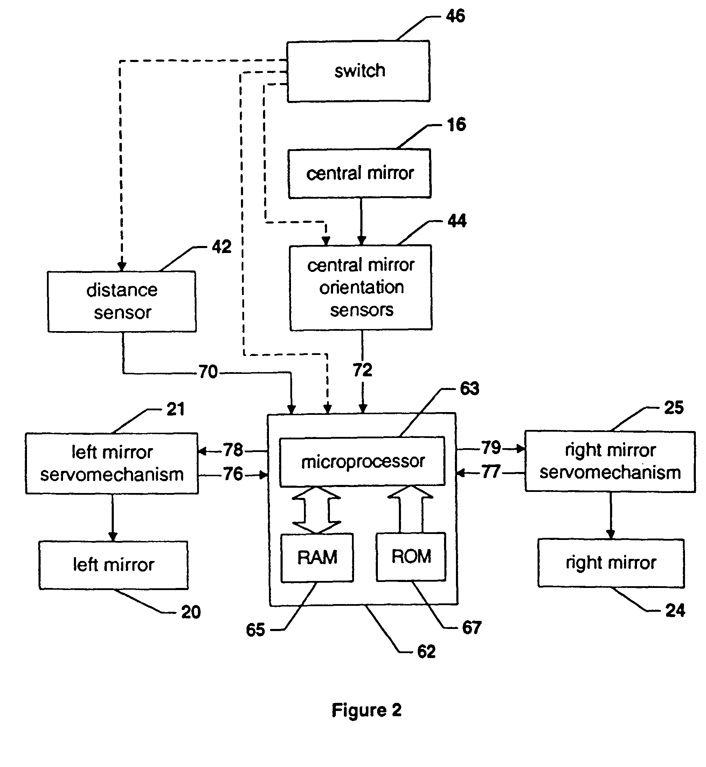

Referring now to Figure 2, the subject apparatus comprises control means in the form of microcomputer 62 located at a convenient location in vehicle 10, electrically coupled to the other components of the subject apparatus by cables or other electrical connections. Microcomputer 62 includes a microprocessor 63 having RAM memory 65 and ROM memory 67, in which are stored vehicle parameters such as the coordinates of the center points 30, 36 and 40, of all mirrors 16, 20 and 24, as determined from vehicle dimensions and mirror locations. Similarly, known vision parameters such as light rays 52, 50 and 54 are stored in the ROM memory 67. Once activated by switch 46, microcomputer 62 receives distance signal 70 from distance sensor 42, and orientation signal 72 from central mirror orientation detector 44. Microprocessor 63 processes these signals in a manner hereinafter described, and generates output control signals 78, 79 to mirror servomechanisms 21, 25, respectively based on feedback signals 76, 77.

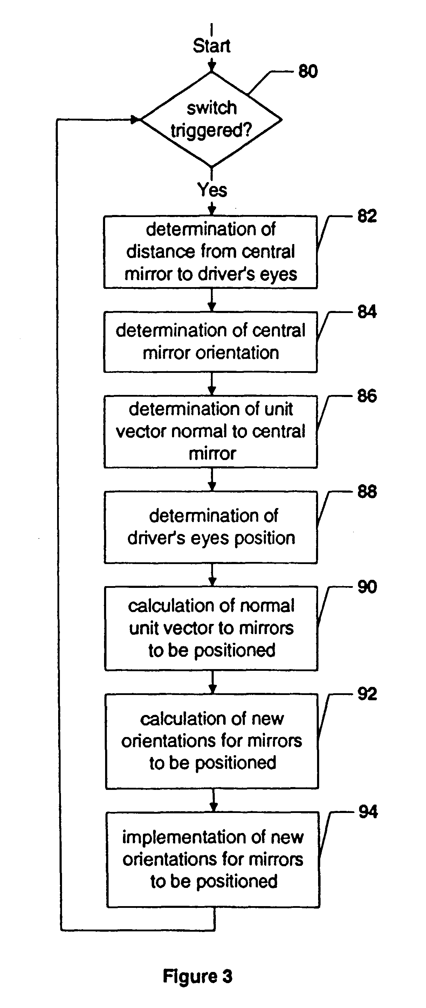

Referring now to Figure 3, control means in the form of microcomputer 62 is programmed with computer software stored in ROM memory 67, which operates as follows. When switch 46 is triggered (block 80), control means in the form of microcomputer 62 is activated and receives signals 70 and 72 from the location means in the form of distance sensor 42 and orientation detector 44. Control means then determines the distance between central mirror 16 and driver's eyes 27 (block 82), the orientation of the central mirror (block 84), the unit vector 56 normal to the central mirror (block 86) and vector 32 defining the position of the driver's eyes 27 (block 88). Subsequently, control means determines unit vectors 58 and 60 normal to the left mirror 20 and right mirror 24 in their desired orientation (block 90) which respectively define the desired orientation of these mirrors, and thus determines the new servomechanism positions for the left mirror 20 and right mirror 24 (block 92), and generates position control signals 78 and 79 which implement the new servomotor positions (block 94).

Microcomputer 62 determines the required orientation of the outside mirrors by implementing the following algorithm. Given:

(1) the coordinates of center points 36 (left hand mirror) 30 (central mirror) and 40 (right hand mirror),

(2) the distance from the point 30 (central mirror) to the driver's eyes 27 provided by distance sensor 42,

(3) the orientation of the central mirror provided by central mirror orientation detector 44, and

(4) the unit direction vectors for light rays 52, 50 and 54,
the unit vector 58 normal to the surface of mirror 20 in its desired orientation, and the unit vector 60 normal to the surface of mirror 24 in its desired orientation are determined as follows:

(a) From the orientation of the central mirror 16 provided by central mirror orientation detector 44, the unit vector 56 normal to the surface of central mirror 16 is directly calculated by translating the mirror orientation detector 44 positions expressed in its coordinate system (for example a rotational coordinate system) to the X-Y-Z coordinate system.

(b) Given the unit vector 56 and the unit vector 50, the direction of vector 32 is determined from physics (light reflecting on a mirror): it is known that the unit vector 56 bisects the angle A formed by the vectors 32 and 50 intersecting at point 30 on the plane they form.

(c) Having determined the direction of vector 32, and knowing the distance from the central mirror center point 30 to the driver's eyes 27, vector 32 is fully defined, yielding the coordinates of the driver's eyes 27.

(d) Given the coordinates of the left mirror center point 36 and the coordinates of the driver's eyes 27, vector 34 joining the two points is directly determined.

(e) Similarly, given the coordinates of the right mirror center point 40 and the coordinates of the driver's eyes 27, vector 38 joining the two points is directly determined.

(f) Given the unit vector 34 and the unit vector 52, the unit vector 58 normal to the surface of the left hand mirror 20 is determined from physics (light reflecting on a mirror): it is known that the unit vector 58 bisects the angle B formed by the vectors 34 and 52 intersecting at point 36 on the plane they form.

(g) Similarly, given the unit vector 38 and the unit vector 54, the unit vector 60 normal to the surface of the right hand mirror 24 is determined from physics (light reflecting on a mirror): it is known that the unit vector 60 bisects the angle C formed by the unit vectors 38 and 54 intersecting at point 40 on the plane they form.

The above steps may be similarly repeated for any other mirror considered to determine the corresponding unit vector normal to the mirror's surface.

In use, the driver 12 manually adjusts central mirror 16, activating switch 46 which in turn activates the control means. Control means receives signals 70 and 72 from location means in the form of distance sensor 42 and central mirror orientation detector 44. Distance sensor 42 measures the distance between the central mirror 16 and the driver's eyes 27, and central mirror orientation detector 44 measures the orientation of central mirror 16. The signals from distance sensor 42 and central mirror orientation detector 44 are processed by the control means to determine normal unit vector 56 and vector 32 defining the coordinates of the driver's eyes 27. Mirror orientation determination means subsequently determines normal unit vectors 58, 60 which define the orientation of outside mirrors 20, 24. Mirror servo-control means subsequently generates position control signals 78, 79 based on feedback signals 76, 77, to activate servomechanisms 21, 25 respectively, which reposition outside mirrors 20, 24 so that their surfaces become normal to vectors 58 and 60 respectively.

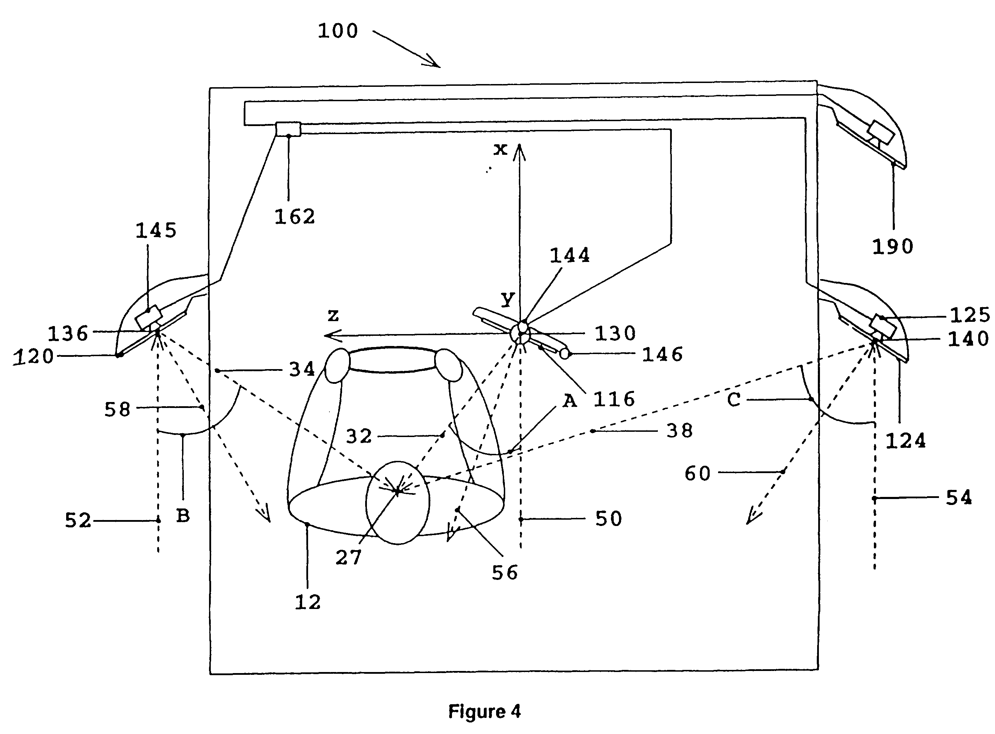

Referring now to Figure 4, in a first alternative embodiment, the subject apparatus shown generally as 100 is adapted to allow the driver to adjust manually both a first proximate mirror (typically the inside central mirror), and a second proximate mirror (typically the driver's side mirror). Once these adjustments are performed, apparatus 100 then automatically adjusts one or more remote mirrors, such as the passenger side mirror 124.

Apparatus 100 comprises location means, control means and position means. Location means comprises a central mirror orientation detector 144 and driver's side mirror orientation detector 145. The control means comprises a microcomputer 162. The mirror positioning means comprises servomechanism 125. The vehicle parameters comprise the location of center points 130, 136 and 140 of mirrors 116, 120 and 124 respectively. The vision parameters comprise the light rays 50, 52 and 54. Orientation detectors 144, 145 detect the orientation of the mirrors 116, 120 once they are manually adjusted and switch 146 is activated. Microcomputer 162 is programmed to perform a triangulation algorithm, which provides the control signals for properly orienting passenger's side mirror 124, as well as any additional rearview mirror 190 that may be mounted on a large vehicle such as a truck.

In use, the driver adjusts both the central mirror 116 and the driver's side mirror 120, activating switch 146, which results in apparatus 100 automatically adjusting remote mirrors 124 and 190. An advantage of this alternative embodiment of the invention is that apparatus 100 does not require a distance sensor for sensing the distance between the central mirror and the driver's eyes 27, or a servomechanism for the driver's side mirror, although an orientation detector is nevertheless required to determine the orientation of the driver's side mirror.

Microcomputer 162 determines the orientation of passenger side mirror 124 by implementing the following algorithm. Given:

(1) the coordinates of center points 140 (remote mirror) 130 (first proximate mirror) and 136 (second proximate mirror),

(2) the orientation of the first proximate mirror provided by central mirror orientation detector 144,

(3) the orientation of the second proximate mirror provided by second mirror orientation detector 145, and

(4) the unit direction vectors for light rays 52, 50 and 54,

the unit vector 60 normal to the surface of passenger side mirror 124 (or other remote mirror) is determined as follows:

(a) From the orientation of the first proximate mirror 116 provided by orientation detector 144, the unit vector 56 normal to the surface of mirror 116 is directly calculated by translating the orientation detector 144 positions expressed in its coordinate system (for example a rotational coordinate system) to the X-Y-Z coordinate system.

(b) From the orientation of the second proximate mirror 120 provided by second mirror orientation detector 145, the unit vector 58 normal to the surface of mirror 120 is directly calculated by translating the mirror orientation detector 145 positions expressed in its coordinate system (for example a rotational coordinate system) to the X-Y-Z coordinate system.

(c) Given the unit vector 56 and the unit vector 50, the direction of vector 32 is determined from physics (light reflecting on a mirror): it is known that the unit vector 56 bisects the angle A formed by the vectors 32 and 50 intersecting at point 130 on the plane they form.

(d) Given the unit vector 58 and the unit vector 52, the direction of vector 34 is determined from physics (light reflecting on a mirror): it is known that the unit vector 58 bisects the angle B formed by the unit vectors 34 and 52 intersecting at point 136 on the plane they form.

(e) Having calculated the direction of vectors 32 and 34, the coordinates of the driver's eyes 27 are determined by finding the intersection of the line with origin center point 136 and direction vector 34 and the line with origin center point 130 and direction vector 32. If the first proximate mirror 116 and second proximate mirror 120 are set with slight inaccuracies and the line with origin center point 136 and direction vector 34 and the line with origin center point 130 and direction vector 32 do not actually intersect, the driver's eye position is approximated by the midpoint of the shortest line segment linking the two lines (standard geometric calculation).

(f) Given the coordinates of the other mirror center point 140 and the coordinates of the driver's eyes 27, vector 38 joining the two points is directly determined.

(g) Given the vector 38 and the unit vector 54, the unit vector 60 normal to the surface of the right hand mirror 124 is determined from physics (light reflecting on a mirror): it is know that the unit vector 60 bisects the angle C formed by the unit vectors 38 and 54 intersecting at point 140 on the plane they form.

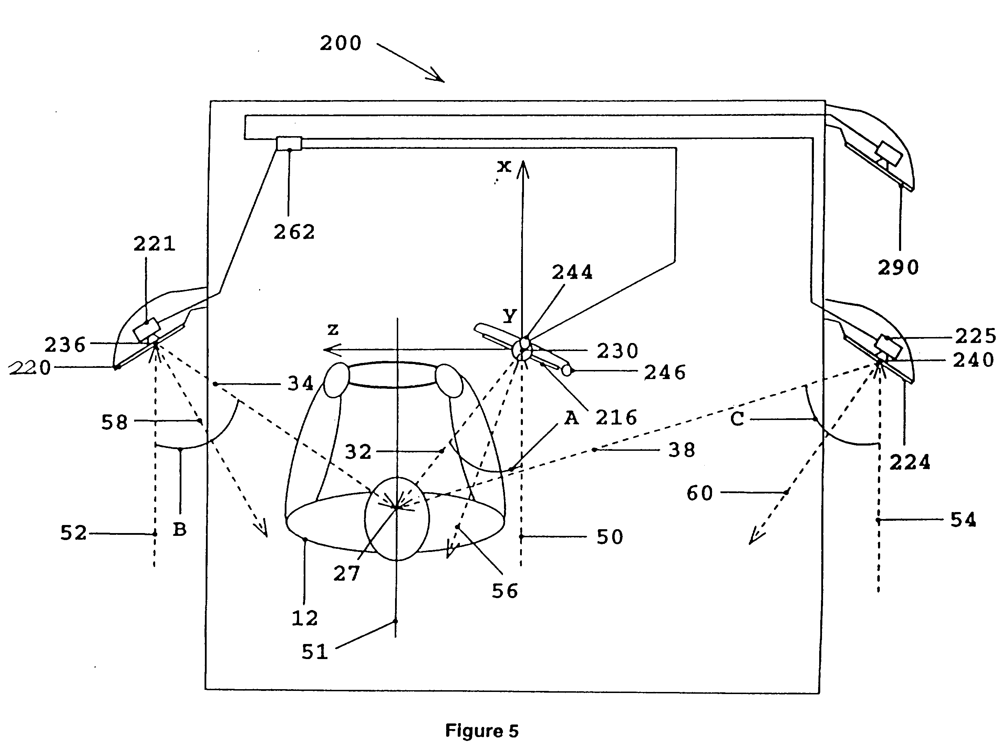

Referring now to Figure 5, in a second alternative embodiment, the subject apparatus shown generally as 200 comprises location means in the form of a central mirror orientation detector 244, control means in the form of a microcomputer 262, and mirror positioning means in the form of servomechanisms 221, 225.

In this second alternative embodiment, it is assumed that the driver will situate himself in a known lateral position (typically symmetrically behind the steering wheel). The Z coordinate of the driver's seating position is therefore assumed to be the intersection of plane 51 with the Z axis. The plane 51 is vertical and parallel to the XY plane and passes through the center of the driver's seat, symmetrically dividing the driver 12 in two, and containing the driver's eye 27. The vehicle parameters comprise the location of center points 230, 236 and 240 of mirrors 216, 220 and 224 respectively, and the Z coordinate of the driver's seating position. The rearview vision parameters comprise the light rays 50, 52 and 54. The driver is simply required to adjust manually one proximate mirror (typically the inside central mirror). Once this adjustment is performed, the position of the driver's eyes 27 is determined.

Orientation detector 244 detects the orientation of the mirror 216 once it is manually adjusted and switch 246 is activated. Microcomputer 262 is programmed to perform a triangulation algorithm, which provides the control signals for properly orienting mirrors 220 and 224, as well as any additional rearview mirror 290.

In use, the driver adjusts the central mirror 216 and activates switch 246, which results in apparatus 200 automatically adjusting remote mirrors 220, 224 and 290. An advantage of this alternative embodiment of the invention is that apparatus 200 does not require a distance sensor for sensing the distance between the central mirror and the driver's eyes 27. Further, only one proximate mirror needs to be manually adjusted. Nevertheless, the Z coordinate of the driver's seating position as defined above must be known, and input as a vehicle parameter into the memory of microcomputer 262.

Microcomputer 262 determines the required orientation of the remote mirrors by implementing the following algorithm. Given:

(1) the coordinates of center points 236 (left hand mirror) 230 (central mirror) and 240 (right hand mirror),

(2) the Z coordinate of the driver's seating position and eyes given by the intersection of the vertical plane 51 with the Z axis,

(3) the orientation of the central mirror provided by central mirror orientation detector 244, and

(4) the unit direction vectors for light rays 52, 50 and 54,
the unit vector 58 normal to the surface of mirror 220, and the unit vector 60 normal to the surface of mirror 224 are determined as follows:

(a) From the orientation of the central mirror 216 provided by central mirror orientation detector 244, the unit vector 56 normal to the surface of central mirror 216 is directly calculated by translating the mirror orientation detector 244 positions expressed in its coordinate system (for example a rotational coordinate system) to the X-Y-Z coordinate system.

(b) Given the unit vector 56 and the unit vector 50, the direction of vector 32 is determined from physics (light reflecting on a mirror): it is known that the unit vector 56 bisects the angle A formed by the vectors 32 and 50 intersecting at point 230 on the plane they form.

(c) Given the direction of vector 32, the coordinates of the driver's eyes 27 can be determined since the driver's eyes 27 constitute the intersection of the line of direction vector 32 passing through center point 230 with the vertical plane 51.

(d) Given the coordinates of the left mirror center point 236 and the coordinates of the driver's eyes 27, vector 34 joining the two points is directly determined.

(e) Similarly, given the coordinates of the right mirror center point 240 and the coordinates of the driver's eyes 27, vector 38 joining the two points is directly determined.

(f) Given the unit vector 34 and the unit vector 52, the unit vector 58 normal to the surface of the left hand mirror 220 is determined from physics (light reflecting on a mirror): it is known that the unit vector 58 bisects the angle B formed by the vectors 34 and 52 intersecting at point 236 on the plane they form.

(g) Similarly, given the unit vector 38 and the unit vector 54, the unit vector 60 normal to the surface of the right hand mirror 224 is determined from physics (light reflecting on a mirror): it is known that the unit vector 60 bisects the angle C formed by the unit vectors 38 and 54 intersecting at point 240 on the plane they form.

The above steps may be similarly repeated for any other mirror considered to determine the corresponding unit vector normal to the mirror's surface.

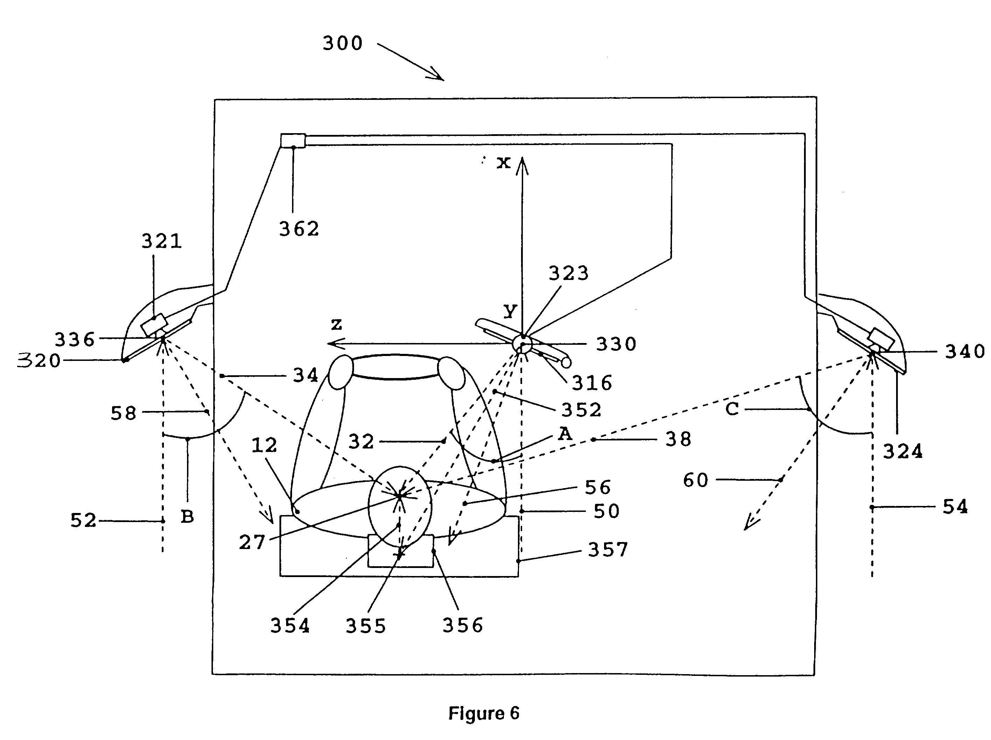

Referring now to Figure 6, in a third alternative embodiment of the subject apparatus, referred to generally as apparatus 300, it is assumed that the driver's eyes 27 will be situated in a known position defined by vector 354, relative to the position 355 of the headrest 356. The driver is simply required to activate switch 346 causing the position of his eyes to be determined.

Apparatus 300 includes location means, control means and position detecting means. The location means takes the form of position detecting means for detecting the position 355 of the headrest 356 of the driver seat 357. Head position detecting means 355 could, for example, comprise the position sensors used in power-adjusted seating mechanisms able to memorize the position of their components (seat, backrest, headrest, etc.) in relation to one another. The control means comprises a microcomputer 362 like microcomputer 62 of the preferred embodiment. The mirror positioning means comprise servomechanisms 321, 323 and 325, for mirrors 320, 316 and 324 respectively. The vehicle parameters include not only the location of the center points 330, 336 and 340 of the mirrors 316, 320 and 324 respectively, but also the assumed driver's eyes position vector 354 relative to the headrest position 355. The rearview vision parameters comprise the light rays 50, 52 and 54. Microcomputer 362 is programmed to perform a triangulation algorithm which determines the driver's eyes position 27, by implementing the following location determination algorithm. Given:

(1) the coordinates of the position 355 of the headrest 356, in the form of vector 352, and

(2) the driver's eyes position relative to the position 355 of the headrest 356, defined by vector 354,

the vector 32 defining the position of the driver's eyes 27 is determined by vector addition of vectors 352 and 354. Microcomputer 362 then determines the desired orientation of all three mirrors by implementing a mirror orientation determination algorithm similar to those of the previous embodiments.

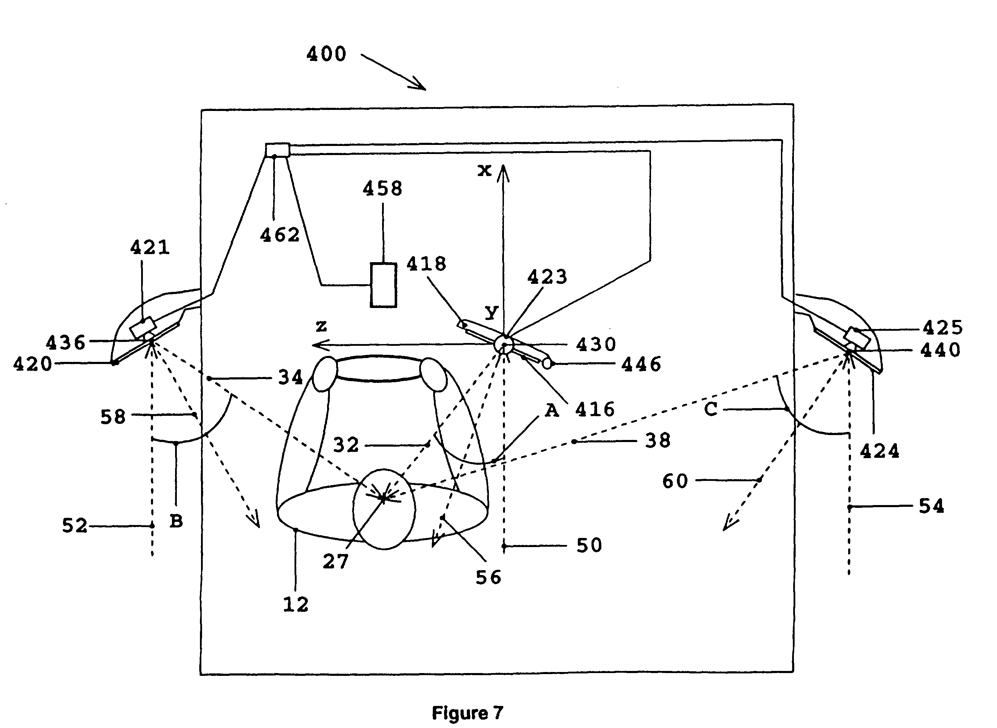

Referring now to Figure 7, in a fourth alternative embodiment, the apparatus of the subject invention, shown generally as 400, comprises location means in the form of image sensing means 458, control means in the form of a microcomputer 462, and mirror positioning means in the form of servomechanisms 421, 423 and 425 for mirrors 420, 416 and 424 respectively. The vehicle parameters comprise the location of center points 430, 436 and 440 of mirrors 416, 420 and 424. The rearview vision parameters comprise the light rays 50, 52 and 54.

The driver is simply required to activate switch 446 which triggers image sensing means 458 which records an image of the driver's head, and generates an output signal correlatable therewith. This output signal is then sent to microcomputer 462, which processes the signal and determines the location of the driver's eyes. Once this location is known, microcomputer 462 can determine the desired orientation of mirrors 416, 420 and 424 by implementing a mirror orientation algorithm similar to those described hereinabove. Image sensing means 458 may comprise a vision system such as a videocamera, or other imaging or beam projection and detection apparatus utilizing sound, ultrasound, infrared or other radiation field, to create and record an image of the driver's head.

An advantage of the third and fourth alternative embodiments 300, 400 is that they do not require the driver to manually adjust any of the mirrors for location purposes. Nevertheless, servomechanisms are required for all mirrors requiring adjustment in order for the control and positioning means to detect the mirrors' current positions and reorient them accordingly.

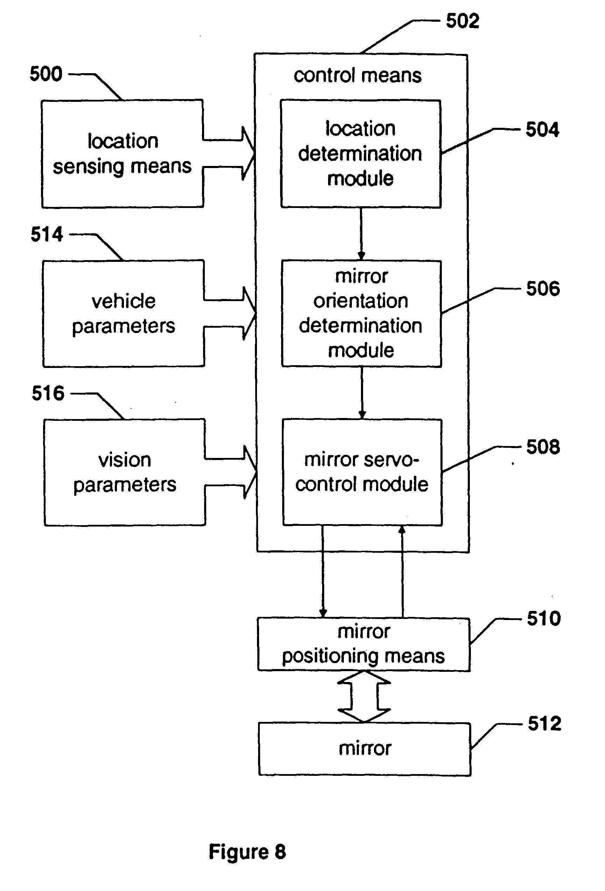

Referring now to Figure 8, it should be apparent from the above descriptions of the preferred and various alternative embodiments that the location means 500 of the subject invention can take various forms as follows:

1) in the case of preferred embodiment, location means 500 comprise orientation detecting means for detecting the orientation of the proximate mirror after it has been adjusted by the driver, and sensing means for determining the distance between the proximate mirror and the driver's eyes, preferably an infrared or ultrasound sensor mounted on the central mirror mount or other suitable location;

2) in the case of the first alternative embodiment 100, location means 500 comprises orientation detecting means for detecting the orientation of the proximate mirror (after it has been adjusted by the driver), and a second orientation detecting means for detecting the orientation of a second proximate mirror (after it too has been adjusted by the driver);

3) in the case of the second alternative embodiment 200, location means 500 comprises orientation detecting means for detecting the orientation of the proximate mirror only (after it has been adjusted by the driver), as it is assumed that the driver will situate himself in a known lateral driving position in a driver's seat situated behind the steering wheel;

4) in the case of the third alternative embodiment 300, location means 500 comprises position detecting means for detecting the position of the driver's seat and headrest, once the driver has appropriately adjusted his driving seating position, which in turn provides the location of the driver's eyes by adding a vector representing an assumed position of the driver's eyes relative to the headrest; or

5) in the case of the fourth alternative embodiment 400, location means 500 comprises image sensing means for recording an image of the driver's head through video, ultrasound, infrared or other imaging means, after the driver has assumed a driving position.

In each of the above embodiments, the location means senses current values of location variables related to the location of the driver's eyes (eg. the orientation of a mirror after it has been adjusted by the driver to achieve a desired rearview sightline), and generates location signals correlatable therewith.

It should also be apparent that the control means 502 of the subject invention includes program modules for performing three different functions:

1) location determination module 504, which determines the position of the driver's eyes, based on the location signals provided by the location means 500, known vehicle parameters 514 and vision parameters 516;

2) mirror orientation determination module 506, which determines the desired orientation of the mirror to be adjusted for rearview vision purposes, based on the position of the driver's eyes, known vehicle parameters 514 and vision parameters 516; and

3) mirror servo-control module 508, which provides the mirror positioning means 510 with suitable positioning signals, based on the sensed mirror orientation and desired mirror orientation, in order to achieve the desired mirror orientation for mirror 512.

The present invention is also directed to methods for automatically adjusting the orientation of a selected mirror having a center point of known coordinates and rotatable about a selected rotation point, to enable an individual using the mirror to achieve a pre-selected reflected sightline in the mirror defined by a reflected sightline vector intersecting the mirror surface at the center point.

In a preferred embodiment, subject method comprising the steps of:

1. determining the coordinates of the eyes of an individual using the mirror;

2. determining the desired orientation of the mirror based upon the coordinates of the individual's eyes and the center point of the mirror, and the reflected sightline vector, by taking the following steps:

(a) determining a direct sightline vector extending from the coordinates of the individual's eyes to the center point of the mirror;

(b) determining a sightline plane formed by the direct sightline vector and the reflected sightline vector intersecting at the mirror center point;

(c) determining the desired mirror orientation by determining a bisecting vector bisecting the angle formed by the direct sightline vector and the reflected sightline vector intersecting at the center point of the mirror on the sightline plane; and

(d) determining the desired mirror orientation in the form of a unit vector obtained by normalizing the bisecting vector;

and

3. positioning the mirror to match the desired orientation to a desired degree of accuracy.

This method may be implemented by using one of the several embodiments of the location means 500 described hereinabove, the control means 502, and the positioning means 510. For example, in the case of the second alternative embodiment illustrated in Figure 5, wherein the vehicle comprises a proximate mirror having a center point and a driver's seat having a center located at a known lateral distance from the longitudinal axis of the vehicle, step 1 of the subject method can be carried out by taking the following steps:

(a) determining a proximate mirror normal vector normal to the proximate mirror surface at the proximate mirror center point;

(b) determining a proximate mirror sight line plane formed by the reflected sight line vector and the proximate mirror normal vector intersecting at the proximate mirror center point;

(c) determining a proximate mirror direct sight line vector in the proximate mirror sight line plane, intersecting the reflected sight line vector at the proximate mirror center point, and forming with this vector an angle bisected by the proximate mirror normal vector;

(d) determining a proximate mirror direct sightline line defined by the direction of the proximate mirror direct sightline vector and the proximate mirror center point; and

(e) determining the location of the driver's eyes as the intersection point of the proximate mirror direct sightline line with a vertical plane parallel to the longitudinal axis of the vehicle passing through the center of the driver's seat.

Further, it should be noted that in step 2 above, the desired orientation of the mirror may be determined either in the form of a vector normal to the mirror surface at its center point or in the form of corresponding rotational angles.

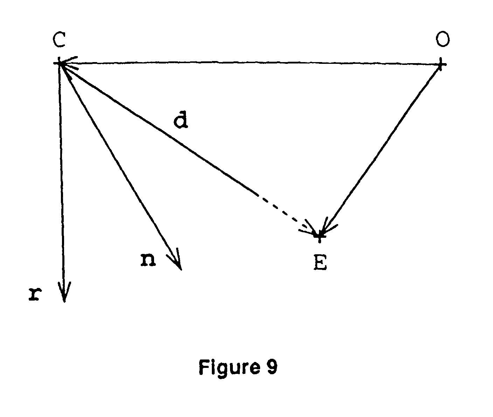

Referring now to Figure 9, in a preferred embodiment, the mirror orientation determination module performs the following steps where:

O   represents the origin of the coordinate system;
E   represents the location of the driver's eyes;
C   represents the location of a remote mirror center point;
n   represents the unit vector normal to the remote mirror plane;
d   represents the unit direct sightline vector; and
r   represents the unit reflected sightline vector.

Given O, the origin of the coordinate system, E, the location of the driver's eyes, C, the location of a remote mirror center point, and r, the unit reflected sightline vector, the module performs the following steps:

1. Calculation of CE:

$$CE = OE - OC$$

2. Calculation of modulus of CE:

$$|CE|$$

3. Calculation of **d**:

$$d = - \frac{CE}{|CE|}$$

4. Calculation of **r - d**

5. Calculation of modulus of **r - d:**

$$|r - d|$$

6. Calculation of **n**:

$$n = \frac{r - d}{|r - d|}$$

7. Calculation of remote mirror orientation angles from **n** for the rotational coordinate system considered.

The above steps may be similarly repeated for any selected mirror to determine the corresponding unit vector normal to the mirror's surface, for example the central rearview mirror when such mirror is not used for location purposes.

While the methods and apparatus of the subject invention have been described and illustrated with respect to various preferred and alternative embodiments, it should be understood that:

(a) while in the preferred embodiment, the control means includes a location determining module which determines the location of the driver's eyes based on a location sensor which senses the distance between the central inside mirror and the driver's eyes, the location determining module could determine the location of the driver's eyes based on sensing means related to some other conveniently adjustable mirror located inside or outside the vehicle proximate the driver;

(b) the location determining module could determine the location of the driver's eyes based on other sensing means comprising a variety of sensors;

(c) while the proximate mirrors are described as being manually adjusted by the driver, these mirrors could be adjusted by the driver operating a suitable interface such as a keypad, a mechanical joystick or a switch apparatus activating the corresponding servomechanism;

(d) the rearview vision parameters could be directly adjusted by the driver through a suitable interface such as a keypad, mechanical joystick or a switch apparatus;

(e) the driver could override the positioning of any mirrors either manually, or through a suitable interface such as a keypad, mechanical joystick or switch apparatus activating the corresponding servomechanism;

(f) while the various embodiments utilize a single form of location means, the subject apparatus could use a combination of forms of location means to determine the location of the driver's eyes; and

(g) the control means could include an error detection module the purpose of which is to detect possible inconsistencies in the form of improbable or impossible determinations of the position of the driver's eyes as computed by the location determination module, or desired mirror orientations which are not physically implementable by the positioning means.

It should therefore be understood that various modifications can be made to the preferred embodiments described and illustrated therein, without departing from the subject invention, the scope of which is defined in the appended claims.

**Claims**

1.  Apparatus for automatically adjusting the orientation of at least one remote mirror (20; 24; 124; 190; 220; 224; 290) located on a vehicle having at least one proximate mirror (16; 116; 120; 216) located near a driver's seat so as to be manually adjustable by a driver while seated in a driving position in the driver's seat, comprising:

    (a) orientation detecting means (44; 144; 145; 244) operatively coupled to the at least one proximate mirror (16; 116; 120; 216) for detecting a current orientation of the at least one proximate mirror (16; 116; 120; 216) after adjustment by the driver and generating orientation signals (72) correlatable therewith;

    (b) control means (62; 162; 262) operatively coupled to the orientation detecting means (44; 144; 145; 244) for determining a current location of a cyclopic eye located at a point within the driver's head around which the driver's head pivots when viewing the mirrors (20; 24; 124; 190; 220; 224; 290; 16; 116; 120; 216) based upon the orientation signals (72) and known parameters, and for determining a desired orientation of the at least one remote mirror (20; 24; 124; 190; 220; 224; 290), based upon the current location of the cyclopic eye, and for generating control signals (78; 79) correlatable therewith; and

    (c) mirror positioning means (21; 25; 121; 125; 225) responsive to control signals (78; 79) for positioning the at least one remote mirror (20; 24; 124; 190; 220; 224; 290) in the desired orientation.

2.  The apparatus defined in claim 1, wherein the orientation detecting means comprises a position sensor (44; 144; 145; 244) coupled to the at least one proximate mirror (16; 116; 120; 216).

3.  The apparatus defined in claim 1, also comprising activation means (46; 146; 246) operable by the driver for activating the orientation detecting means (44; 144; 145; 244) and the control means (62; 162; 262).

4.  The apparatus defined in claim 3, wherein the activation means comprises a manually operated switch (46; 146; 246) located adjacent the proximate mirror (16; 116; 120; 216).

5.  The apparatus defined in claim 1, wherein the at least one proximate mirror comprises a central inside mirror (16; 116; 216) and the at least one remote mirror comprises a passenger side mirror (24; 124; 190; 224; 290) located on the outside of the vehicle.

6.  The apparatus defined in claim 1, wherein the mirror positioning means comprises a servomechanism (21; 25; 121; 125; 225) coupled to the remote mirror (20; 24; 124; 190; 220; 224; 290).

7.  The apparatus as defined in claim 6, wherein the servomechanism (21; 25; 121; 125; 225) comprises at least one electric motor and feed back means for providing feedback signals (76; 77) to the control means (62; 162; 262) correlatable with the current orientation of the remote mirror (20; 24; 124; 190; 220; 224; 290).

8.  The apparatus defined in claim 1, also comprising distance sensing means (42) for sensing the distance between the proximate mirror (16) and the driver's head (28 and generating distance signals (70) correlatable therewith, said control means (62) utilizing the distance signals (70) to determine the current location of the cyclopic eye.

9.  The apparatus defined in claim 1, wherein at least one proximate mirror comprises a central inside mirror (116) and a driver's side outside mirror (120) located on the driver's side of the outside of the vehicle, and the at least one remote mirror comprises a passenger side mirror (124; 190) located on the outside of the vehicle.

10. The apparatus defined in claim 1, wherein the control means (262) determines the current location of the cyclopic eye as a function of a) an imaginary vertical plane (51) extending through the driver's seat and longitudinally with respect to the vehicle, and b) the orientation signals (72).

11. The apparatus defined in claim 1, wherein the control means (62; 162; 262) comprises a microcomputer (63) including storage means (65; 67) for storing the known vehicle parameters and the vision parameters, input means for receiving the orientation signals (72), processing means for generating control signals (78; 79) based upon the orientation signals (72) and the parameters, and output means for outputting the control signals (78; 79) to the mirror positioning means (21; 25; 121; 125; 225).

12. The apparatus defined in claim 11, wherein the processing means comprises:

(a) means for determining a direct sightline vector (34; 38; d) extending from the location of the cyclopic eye to the center point (36; 40; 140; 236; 240) of the remote mirror (20, 24; 124; 190; 220; 224; 290);

(b) means for determining a sightline plane formed by the direct sightline vector (34; 38; d) and a desired reflected sightline vector (52; 54; r) intersecting at the center point (36; 40; 140; 236; 240) of the remote mirror (20, 24; 124; 190; 220; 224; 290); and

(c) means for determining the desired mirror orientation by determining a bisecting vector (58, 60) bisecting the angle (B, C) formed by the direct sightline vector (34; 38; d) and the reflected sightline vector (52; 54; r) intersecting at the center point (36; 40; 140; 236; 240) of the remote mirror (20, 24; 124; 190; 220; 224; 290) on the sightline plane.

13. A mirror system for a motor vehicle comprising:

(a) a central mirror (16; 116; 216) constructed and arranged to be manually oriented by a motor vehicle driver seat occupant for optimal central rearview visibility;

(b) an orientation detector (44; 144; 244) connected with said manually movable central mirror (16; 116; 216) and being constructed and arranged to detect the manually oriented orientation of said central mirror (16; 116; 216) and to generate orientation signals (72) indicative of the detected orientation of said manually movable central mirror (16; 116; 216)

(c) an electronic controller (62; 162; 262) for receiving said signals generated by said an orientation detector (44; 144; 244) connected with said manually movable central mirror (16; 116; 216) and for generating controller output signals (78; 79) based upon said signals generated by said orientation detector (44; 144; 244), the controller comprising a processor (63) for processing the orientation signals (72) and determining a current location for a cyclopic eye, located at a point within the head (28) of the occupant around which the occupant's head pivots when viewing the proximate mirror (16; 116; 216) based upon the orientation signals (72);

(d) at least one sideview mirror (20; 24; 124; 190; 220; 224; 290) disposed on the exterior of the motor vehicle and being adjustable for rearview visibility along a side of the motor vehicle; and

(e) an electrically operated motor mechanism (21, 25; 125; 221; 225) associated with said sideview mirror (20; 24; 124; 190; 220; 224; 290), said motor mechanism (21, 25; 125; 221; 225) being - operable in response to said controller output signals (78, 79) and being constructed and arranged to automatically orient said sideview mirror (20; 24; 124; 190; 220; 224; 290) for rearview visibility by the driver seat occupant based upon said controller output signals (78; 79).

14. A method for automatically adjusting the orientation of at least one remote mirror (20; 24; 124; 190; 220; 224; 290) located on a vehicle having at least one proximate mirror (16; 116; 120; 216) located near a driver's seat so as to be manually adjustable by a driver while seated in a driving position in the driver's seat, comprising:

(a) detecting a current orientation of the at least one proximate mirror (16; 116; 120; 216) after adjustment by the driver and generating orientation signals (72) correlatable therewith;

(b) determining a current location of a cyclopic eye located at a point within the driver's head (28) around which the driver's head pivots when viewing the proximate mirror (16; 116; 120; 216), based upon the orientation signals (72) and known vehicle parameters and vision parameters;

(c) determining a desired orientation of the at least one remote mirror (20; 24; 124; 190; 220; 224; 290) based upon the current location of the cyclopic eye, and generating control signals (78, 79) correlatable therewith; and

(d) positioning the at least one remote mirror (20; 24; 124; 190; 220; 224; 290) in the desired orientation.

15. Apparatus for automatically adjusting the orientation of at least one remote mirror (20; 24) located on a vehicle having a proximate mirror (16; 116) located near a driver's seat so as to be manually adjustable by a driver while seated in a driving position in the driver's seat, comprising:

(a) distance sensing means for sensing the distance between the proximate mirror (16) and the driver's eyes (27) and generating distance signals (70) correlatable therewith, comprising a distance sensor (42) mounted adjacent the proximate mirror (16);

(b) orientation detecting means operatively coupled to the proximate mirror (16) for detecting the orientation of the proximate mirror (16) after adjustment by the driver and generating orientation signals (72) correlatable therewith, comprising an orientation detector (44) coupled to the proximate mirror (16);

(c) control means (62) operable to model the driver's eyes (27) as being a cyclopic eye located at a point within the driver's head around which the driver's head pivots when viewing the proximate mirror (16) and responsive to the distance sensor (42) and the orientation detector (44) for determining a desired orientation of the remote mirror (20, 24) based upon the distance signals (70) and the orientation signals (72) and known vehicle parameters and vision parameters and for generating control signals (78, 79) correlatable therewith; and

(d) mirror positioning means (21, 25) responsive to control signals (78, 79) for positioning the remote mirror (20, 24) in the desired orientation.

16. Apparatus as defined in claim 15, wherein the control means (62) comprises a computer processor (63) for carrying out the modelling.

17. The apparatus defined in claim 15, wherein the distance sensor means (42) comprises an infrared sensor.

18. The apparatus defined in claim 15, wherein the distance sensor means (42) comprises an ultrasound sensor.

19. A method for automatically adjusting the orientation of at least one power adjusted remote mirror (20; 24; 124; 190) mounted in a vehicle having a proximate mirror (16; 116; 120) manually adjustable by a driver of the vehicle, the remote mirror (20; 24; 124; 190) having a center point (36; 40; 140) of known coordinates and rotatable about a selected rotation point, the method enabling the driver to achieve a pre-selected reflected sightline (52; 54; r) in the remote mirror (20; 24; 124; 190) defined by a reflected sightline vector (52; 54; r) intersecting the remote mirror at the center point (36; 40; 140), comprising the steps of:

(a) detecting the distance between the proximate mirror (16; 116; 120) and the driver's eyes (27) and generating distance signals (70) correlatable therewith;

(b) detecting the orientation of the proximate mirror (16; 116; 120) after adjustment by the driver to achieve a desired rearview sightline (50; 52) for the proximate mirror (16; 116; 120) and generating orientation signals (72) correlatable therewith;

(c) determining the coordinates of the eyes (27) of the driver based upon the distance signals (70) and the orientation signals (72) and the center point (36; 40; 140) of the remote mirror (20; 24; 124; 190) and the reflected sightline vector (52; 54; r), modelling the driver's eyes as being a cyclopic eye located within the driver's head at a point around which the driver's head pivots when viewing the proximate mirror (16; 116; 120; 216; 316).;

(d) determining the desired orientation of the remote mirror (20; 24; 124; 190) based upon the coordinates of the eyes (27) of the driver and known vision and vehicle parameters; and

(e) positioning the remote mirror (20; 24; 124; 190) to match the desired orientation.

20. Rearview vision adjustment apparatus for a vehicle having a driver's seat, comprising:

(a) a first proximate mirror (116) mounted on the vehicle at a first location near the driver's seat so as to be manually adjustable by a driver while seated in a sitting position;

(b) a second proximate mirror (120) mounted at a second location near the driver's seat spaced from the first location so as to be manually adjustable by the driver while seated in a sitting position;

(c) at least one remote mirror (124; 190) located on the outside of the vehicle at a location remote from the driver's seat;

(d) first orientation detecting means (144) operatively coupled to the first proximate mirror (116) for detecting the orientation of the first proximate mirror (116) after adjustment by the driver and generating first orientation signals correlatable therewith;

(e) second orientation detecting means (145) operatively coupled to the second proximate mirror (120) for detecting the orientation of the second proximate mirror (120) after adjustment by the driver and generating second orientation signals correlatable therewith;

(f) control means (162) electronically coupled to the first orientation detecting means (144) and the second orientation detecting means (145) for determining a desired orientation of the remote mirror (124; 190) based upon the first orientation signals and the second orientation signals and known vehicle parameters and vision parameters and for generating control signals correlatable therewith, modelling the driver's eyes (27) as being a cyclopic eye located at a point within the driver's head around which the driver's head pivots when viewing the first proximate mirror (116) and second proximate mirror (120); and

(g) mirror positioning means (125) responsive to control signals for positioning the remote mirror (140; 190) in the desired orientation.

21. A method for automatically adjusting the orientation of at least one power adjusted remote mirror (124; 190) mounted in a vehicle having a first proximate mirror (116) manually adjustable by a driver of the vehicle, and a second proximate mirror (120) spaced therefrom and manually adjustable by the driver, the remote mirror (124; 190) having a center point (140) of known coordinates and rotatable about a selected rotation point, the method enabling the driver to achieve a pre-selected reflected sightline (54; r) in the remote mirror (124; 190) defined by a reflected sightline vector (54; r) intersecting the remote mirror (124; 190) at the center point (140), comprising the steps of:

(a) detecting the orientation of the first proximate mirror (116) after adjustment by the driver to achieve a desired rearview sightline (50) for the first proximate mirror (116) and generating first orientation signals correlatable therewith;

(b) detecting the orientation of the second proximate mirror (120) after adjustment by the driver to achieve a desired rearview sightline (52) for the second proximate mirror (120) and generating second orientation signals correlatable therewith;

(c) determining the coordinates of the eyes (27) of the driver based upon the first orientation signals and the second orientation signals and the center point (140) of the remote mirror (124; 190) and the reflected sightline vector (54; r), modelling the driver's eyes (27) as being a cyclopic eye located at a point within the driver's head around which the driver's head pivots when viewing the first proximate mirror (116) and second proximate mirror (120);

(d) determining the desired orientation of the remote mirror (124; 190) based upon the coordinates of the eyes (27) of the driver and known vision and vehicle parameters; and

(e) positioning the remote mirror (124; 190) to match the desired orientation.

22. A motor vehicle mirror system for automatically adjusting sideview mirrors (220; 224; 290) for prescribed side rearview visibility of a motor vehicle driver seat occupant (12) based upon a adjustment of central interior mirror (216), said mirror system comprising:

a central interior mirror (216) constructed and arranged to be oriented by a motor vehicle driver seat occupant (12) for central rearview visibility;
sideview mirrors (220; 224; 290) disposed on opposite exterior sides of the motor vehicle and being adjustable for rearview visibility at opposite sides of the motor vehicle;
an orientation detector (244) operatively connected with said central mirror (216) and being constructed and arranged to detect the orientation of said central mirror (216) and to generate electrical signals indicative of the detected orientation of said mirror (216) ;
an electronic controller (262) electrically connected with said orientation detector (244) for utilizing (i) an assumed distance between a center point (230) of the central mirror (216) and an imaginary plane (51) extending in a longitudinal direction with respect to the motor vehicle and passing through a cyclopic eye located at a single point within the driver seat occupant's head about which the occupant's head pivots to view said central mirror (216) and said sideview mirrors (220; 224; 290), and (ii) said electrical signals generated by said orientation detector (244), to approximate a three dimensional location for said cyclopic eye, said electronic controller generating controller output signals based upon said approximate three dimensional location of said cyclopic eye; and
electrically operated motor mechanisms (221; 225) each connected with a respective one of said sideview mirrors (220; 224; 290), said motor mechanisms (221; 225) being responsive to said controller output signals to orient said sideview mirrors (220; 224; 290) for side rearview visibility by driver seat occupant (12) at opposite sides of the motor vehicle based upon said approximate location of said cyclopic eye about which the driver seat occupant's head pivots, said motor mechanisms (221; 225) orienting said sideview mirrors (220; 224; 290) to reflect prescribed side rearview light rays towards said cyclopic eye within the driver seat occupant's head to enable side rearview vision of said light rays when the driver seat occupant's head is pivoted to view said sideview mirrors (220; 224; 290).

23. A mirror system as claimed in claim 22, wherein said imaginary plane (51) extending in said longitudinal direction and passing through said cyclopic eye within the driver seat occupant's head is assumed to be coincident with an imaginary plane (51) extending in said longitudinal direction and passing through a center of the driver seat, so that said assumed distance is taken as a distance between the center point (230) of the central mirror (216) and imaginary plane (51) extending in said longitudinal direction and passing through the center of the driver seat.

24. A method for operating a motor vehicle mirror system which automatically adjusts sideview mirrors (220; 224; 290) based upon an adjustment of a central interior mirror (216), said method comprising:

   orienting a movable central mirror (216) for central rearview visibility by a motor vehicle driver seat occupant (12) so that a desired central rearview light ray reflected from the central mirror (216) is directed towards the eyes (27) of the driver seat occupant (12) and towards a cyclopic eye located at a pivot point behind the eyes about which the occupant's head pivots to view the central mirror (216) and the sideview mirrors (220; 224; 290);

   detecting the orientation of said central mirror (216) ;

   generating orientation electrical signals indicative of the detected orientation of said movable central mirror (216) ;

   utilizing said orientation electrical signals to determine the direction of a vector normal to a surface of said central mirror (216);

   utilizing i) a predetermined reflected sightline vector extending from a central point (230) of the central mirror (216) along a preselected optical path for central rearview visibility by the driver seat occupant (12), and ii) said vector normal to the surface of said central mirror (216), and iii) an assumed lateral position of said cyclopic eye of the driver seat occupant's head to derive an approximated length and direction of a vector extending between said cyclopic eye of the driver seat occupant's head and central point (230) of the central mirror (216) so as to determine the approximate location of said cyclopic eye;

   generating control signals based upon the determined location of said cyclopic eye;

   automatically orienting sideview mirrors (220; 224; 290) for rearview visibility by the driver seat occupant (12) at opposite sides of the motor vehicle, utilizing the determined approximate location of said cyclopic eye and based upon said control signals, said sideview mirrors (220; 224; 290) being oriented to reflect prescribed sideview light rays toward said cyclopic eye to enable side rearview vision of light rays when the driver seat occupant's head is pivoted to view said sideview mirrors (220; 224; 290).

25. A method for operating a mirror system for a motor vehicle according to claim 24, wherein the step of utilizing the determined approximate location of said cyclopic eye in accomplishing the step of automatically orienting said sideview mirrors (220; 224; 290) comprises:

   determining an approximated direction of vectors extending between said cyclopic eye and a central point (236; 240) of each of said sideview mirrors (220; 224; 290); and utilizing i) said vectors approximately extending between said cyclopic eye and a central point (236; 240) of each if said sideview mirrors (220; 224; 290), and ii) predetermined reflected sightline vectors each respectively extending from a central point (236; 240) of one of said sideview mirrors (220; 224; 290) along a preselected optical path for side rearview visibility by the driver seat occupant (12) to derive respective vector directions normal to the respective surfaces of said sideview mirrors (220; 224; 290), and

   utilizing said vector directions normal to the respective surfaces of said sideview mirrors (220; 224; 290) to derive said orientation of the sideview mirrors (220; 224; 290) for rearview visibility by the driver seat occupant (12) at opposite sides of the motor vehicle.

**Patentansprüche**

1. Einrichtung zum automatischen Einstellen der Ausrichtung zumindest eines entfernten Spiegels (20; 24; 124; 190; 220; 224; 290), der an einem Fahrzeug angebracht ist, das mindestens einen nahen Spiegel (16; 116; 120; 216) hat, der benachbart zum Fahrersitzes angebracht ist, so dass ihn der Fahrer von Hand einstellen kann, wenn er in Fahrhaltung im Fahrersitz sitzt, umfassend:

a) eine Vorrichtung zum Erfassen der Ausrichtung (44; 144; 145; 244), die funktional mit dem mindestens einen nahen Spiegel (16; 116; 120; 216) verbunden ist und die momentane Ausrichtung des mindestens einen nahen Spiegels (16; 116; 120; 216) nach dem Einstellen durch den Fahrer erfasst und damit korrelierbare Ausrichtungssignale (72) erzeugt;

b) eine Steuervorrichtung (62; 162; 262), die wirksam mit der Vorrichtung zum Erfassen der Ausrichtung (44; 144; 145; 244) verbunden ist und einen momentanen Ort eines Zyklopenauges bestimmt, das an einem Punkt im Fahrerkopf angeordnet ist, um den sich der Fahrerkopf dreht, wenn der Fahrer in die Spiegel (20; 24; 124; 190; 220; 224; 290; 16; 116; 120; 216) blickt, und zwar abhängig von den Ausrichtungssignalen (72) und bekannten Parametern, und die eine gewünschte Ausrichtung des mindestens einen entfernten Spiegels (20; 24; 190; 220; 224; 290) abhängig vommomentanen Ort des Zyklopenauges bestimmt und damit korrelierbare Steuersignale (78; 79) erzeugt; und

c) eine Spiegelpositioniervorrichtung (21; 25; 121; 125; 225), die auf die Steuersignale (78; 79) anspricht und den mindestens einen entfernten Spiegel (20; 24; 124; 190; 220; 224; 290) in der gewünschten Ausrichtung anordnet.

2. Einrichtung nach Anspruch 1, wobei die Vorrichtung zum Erfassen der Ausrichtung einen Positionssensor (44; 144; 145; 244) enthält, der mit dem mindestens einen nahen Spiegel (16; 116; 120; 216) verbunden ist.

3. Einrichtung nach Anspruch 1, die auch eine Aktivierungsvorrichtung (46; 146; 246) enthält, die der Fahrer betätigen kann, damit die Vorrichtung zum Erfassen der Ausrichtung (44; 144; 145; 244) und die Steuervorrichtung (62; 162; 262) in Gang gesetzt werden.

4. Einrichtung nach Anspruch 3, wobei die Aktivierungsvorrichtung einen handbetätigten Schalter (46; 146; 246) enthält, der benachbart zum nahen Spiegel (16; 116; 120; 216) angeordnet ist.

5. Einrichtung nach Anspruch 1, wobei der mindestens eine nahe Spiegel einen zentralen Innenspiegel (16; 116; 216) umfasst und der mindestens eine entfernte Spiegel einen Spiegel auf der Beifahrerseite (24; 124; 190; 224; 290) umfasst, der außen am Fahrzeug angebracht ist.

6. Einrichtung nach Anspruch 1, wobei die Spiegelpositioniervorrichtung einen Servomechanismus (21; 25; 121; 125; 225) umfasst, der mit dem entfernten Spiegel (20; 24; 124; 190; 220; 224; 290) verbunden ist.

7. Einrichtung nach Anspruch 6, wobei der Servomechanismus (21; 25; 121; 125; 225) zumindest einen Elektromotor enthält und eine Rückführvorrichtung, die Rückführsignale (76; 77) für die Steuervorrichtung (62; 162; 262) bereitstellt, die mit der momentanen Ausrichtung des entfernten Spiegels (20; 24; 124; 190; 220; 224; 290) korrelierbar sind.

8. Einrichtung nach Anspruch 1, zudem umfassend eine Abstandserfassungsvorrichtung (42), die den Abstand zwischen dem nahen Spiegel (16) und dem Fahrerkopf (28) erfasst und Abstandssignale (70) erzeugt, die damit korrelierbar sind, wobei die Steuervorrichtung (62) die Abstandssignale (70) zum Bestimmen des momentanen Orts des Zyklopenauges verwendet.

9. Einrichtung nach Anspruch 1, wobei der mindestens eine nahe Spiegel einen zentralen Innenspiegel (116) und einen Außenspiegel (120) auf der Fahrerseite außen am Fahrzeug umfasst, und der mindestens eine entfernte Spiegel einen Spiegel (124; 190) auf der Beifahrerseite umfasst, der sich außen am Fahrzeug befindet.

10. Einrichtung nach Anspruch 1, wobei die Steuervorrichtung (262) den momentanen Ort des Zyklopenauges bestimmt als Funktion a) einer gedachten senkrechten Ebene (51), die durch den Fahrersitz geht und bezüglich des Fahrzeugs in Längsrichtung verläuft, und b) der Ausrichtungssignale (72) .

11. Einrichtung nach Anspruch 1, wobei die Steuervorrichtung (62; 162; 262) einen Microcomputer (63) umfasst, der eine Speichervorrichtung (65; 67) enthält, die die bekannten Fahrzeugparameter und die Sichtparameter speichert, eine Eingabevorrichtung, die die Ausrichtungssignale (72) empfängt, eine Verarbeitungsvorrichtung, die Steuersignale (78; 79) abhängig von den Ausrichtungssignalen (72) und den Parametern erzeugt, und eine Ausgabevorrichtung, die die Steuersignale (78; 79) an die Spiegelpositioniervorrichtung (21; 25; 121; 125; 225) ausgibt.

12. Einrichtung nach Anspruch 11, wobei die Verarbeitungsvorrichtung umfasst:

a) eine Vorrichtung zum Bestimmen eines direkten Sichtlinienvektors (34; 38; d), der vom Ort des Zyklopenauges zum Mittelpunkt (36; 40; 140; 236; 240) des entfernten Spiegels (20,

24; 124; 190; 220; 224; 290) verläuft;

b) eine Vorrichtung zum Bestimmen einer Sichtlinienebene, die gebildet wird von dem direkten Sichtlinienvektor (34; 38; d) und einem gewünschten reflektierten Sichtlinienvektor (52; 54; r), die sich im Mittelpunkt (36; 40; 140; 236; 240) des entfernten Spiegels (20, 24; 124; 190; 220; 224; 290) schneiden; und

c) eine Vorrichtung zum Bestimmen der gewünschten Spiegelausrichtung durch das Bestimmen eines Winkelhalbierendenvektors (58, 60), der den Winkel (B, C) halbiert, den der direkte Sichtlinienvektor (34; 38; d) und der reflektierte Sichtlinienvektor (52; 54; r) bilden, wenn sie sich im Mittelpunkt (36; 40; 140; 236; 240) des entfernten Spiegels (20; 24; 124; 190; 220; 224; 290) in der Sichtlinienebene schneiden.

13. Spiegelsystem für ein Motorfahrzeug, umfassend:

a) einen Zentralspiegel (16; 116; 216), der so aufgebaut und gestaltet ist, dass ihn eine Person, die auf dem Fahrersitz eines Motorfahrzeugs sitzt, von Hand für eine bestmögliche zentrale Sicht nach hinten ausrichten kann;

b) einen Ausrichtungserfasser (44; 144; 244), der mit dem von Hand bewegbaren Zentralspiegel (16; 116; 216) verbunden und so aufgebaut und gestaltet ist, dass er die von Hand eingestellte Ausrichtung des Zentralspiegels (16; 116; 216) erfasst und Ausrichtungssignale (72) erzeugt, die die erfasst Ausrichtung des von Hand bewegbaren Zentralspiegels (16; 116; 216) darstellen;

c) einen elektronischen Controller (62; 162; 262), der die Signale empfängt, die der Ausrichtungserfasser (44; 144; 244) erzeugt, der mit dem von Hand bewegbaren Zentralspiegel (16; 116; 216) verbunden ist, und der Controllerausgangssignale (78; 79) abhängig von den Signalen erzeugt, die der Ausrichtungserfasser (44; 144; 244) erzeugt, wobei der Controller einen Prozessor (63) enthält, der die Ausrichtungssignale (72) verarbeitet und abhängig von den Ausrichtungssignalen (72) einen momentanen Ort für ein Zyklopenauge bestimmt, das sich an einem Punkt im Kopf (28) der Person befindet, um den sich der Kopf der Person dreht, wenn sie in den nahen Spiegel (16; 116; 216) blickt;

d) mindestens einen außen am Motorfahrzeug angebrachten Seitenspiegel (20; 24; 124; 190; 220; 224; 290), der für die Sicht nach hinten entlang einer Seite des Motorfahrzeugs eingestellt werden kann; und

e) einen elektrisch betätigten Motormechanismus (21, 25; 125; 221; 225), der zum Seitenspiegel (20; 24; 124; 190; 220; 224; 290) gehört, wobei der Motor' mechanismus (21, 25; 125; 221; 225) abhängig von den Controllerausgangssignalen (78, 79) betätigt werden kann, und der so aufgebaut und gestaltet ist, dass er abhängig von den Controllerausgangssignalen (78; 79) den Seitenspiegel (20; 24; 124; 190; 220; 224; 290) automatisch so einstellt, dass die auf dem Fahrersitz sitzende Person Sicht nach hinten hat;

14. Verfahren zum automatischen Einstellen der Ausrichtung von mindestens einem entfernten Spiegel (20; 24; 124; 190; 220; 224; 290), der sich an einem Fahrzeug befindet, das mindestens einen nahen Spiegel (16; 116; 120; 216) hat, der zum Fahrersitz benachbart ist, damit ihn der Fahrer von Hand einstellen kann, während er in Fahrhaltung im Fahrersitz sitzt, umfassend:

a) das Erfassen einer momentanen Ausrichtung des mindestens einen nahen Spiegels (16; 116; 120; 216) nach dem Einstellen durch den Fahrer und das Erzeugen damit korrelierbarer Ausrichtungssignale (72);

b) das Bestimmen eines momentanen Orts eines Zyklopenauges, das sich an einem Punkt im Kopf (28) des Fahrers befindet, um den sich der Fahrerkopf dreht, wenn der Fahrer in den nahen Spiegel (16; 116; 120; 216) blickt, und zwar abhängig von den Ausrichtungssignalen (72) und bekannten Fahrzeugparametern und Sichtparametern;

c) das Bestimmen einer gewünschten Ausrichtung des mindestens einen entfernten Spiegels (20; 24; 124; 190; 220; 224; 290) abhängig vom momentanen Ort des Zyklopenauges, und das Erzeugen von damit korrelierbaren Steuersignalen (78, 79); und

d) das Einstellen des mindestens einen entfernten Spiegels (20; 24; 124; 190; 220; 224; 290) auf die gewünschten Ausrichtung.

15. Einrichtung zum automatischen Einstellen der Ausrichtung von mindestens einem entfernten Spiegel (20; 24), der an einem Fahrzeug angebracht ist, das einen nahen Spiegel (16; 116) hat, der zum Fahrersitz benachbart ist, so dass ihn ein Fahrer von Hand einstellen kann, wenn er in Fahrhaltung im Fahrersitz sitzt, umfassend:

a) eine Abstandserfassungsvorrichtung, die den Abstand zwischen dem nahen Spiegel (16) und den Augen (27) des Fahrers erfasst und damit korrelierbare AbstandsSignale (70) erzeugt, umfassend einen Abstandssensor (42), der benachbart zum nahen Spiegel (16) montiert ist;

b) eine funktional mit dem nahen Spiegel (16) verbundene Vorrichtungen zum Erfassen der Ausrichtung, die die Ausrichtung des nahen Spiegels (16) nach der Einstellung durch den Fahrer erfasst und damit korrelierbare Ausrichtungssignale (72) erzeugt, umfassend einen Ausrichtungserfasser (44), der mit dem nahen Spiegel (16) gekoppelt ist;

c) eine Steuervorrichtung (62), betreibbar zum Modellieren der Fahreraugen (27) als ein Zyklopenauge, das sich in einem Punkt im Fahrerkopf befindet, um den sich der Kopf des Fahrers dreht, wenn dieser in den nahen Spiegel (16) blickt, wobei die Steuervorrichtung auf den Abstandssensor (42) und den Ausrichtungserfasser (44) anspricht, um eine gewünschte Ausrichtung des entfernten Spiegels (20, 24) abhängig von den Abstandssignalen (70) und den Ausrichtungssignalen (72) und von bekannten Fahrzeugparametern und Sichtparametern zu bestimmen, und um damit korrelierbare Steuersignale (78, 79) zu erzeugen; und

d) eine Spiegelpositioniervorrichtung (21, 25), die auf die Steuersignale (78, 79) anspricht und den entfernten Spiegel (20, 24) in die gewünschte Ausrichtung bringt.

16. Einrichtung nach Anspruch 15, wobei die Steuervorrichtung (62) einen Computerprozessor (63) hat, der den Modellierungsvorgang ausführt.

17. Einrichtung nach Anspruch 15, wobei die Abstandssensorvorrichtung (42) einen Infrarotsensor umfasst.

18. Einrichtung nach Anspruch 15, wobei die Abstandssensorvorrichtung (42) einen Ultraschallsensor umfasst.

19. Verfahren zum automatischen Einstellen der Ausrichtung von mindestens einem motorisch eingestellten entfernten Spiegel (20; 24; 124; 190), der in einem Fahrzeug montiert ist, das einen nahen Spiegel (16; 116; 120) aufweist, den der Fahrzeuglenker von Hand einstellen kann, wobei der entfernte Spiegel (20; 24; 124; 190) einen Mittelpunkt (36; 40; 140) mit bekannten Koordinaten hat und um einen ausgewählten Drehpunkt drehbar ist, und das Verfahren dem Fahrer ermöglicht, eine vorgewählte reflektierte Sichtlinie (52; 54; r) im entfernten Spiegel (20; 24; 124; 190) zu erhalten, die durch einen reflektierten Sichtlinienvektor (52; 54; r) bestimmt ist, der den entfernten Spiegel im Mittelpunkt (36; 40; 140) schneidet, umfassend die Schritte:

a) Erfassen des Abstands zwischen dem nahen Spiegel (16; 116; 120) und den Fahreraugen (27), und Erzeugen von damit korrelierbaren Abstandssignalen (70);

b) Erfassen der Ausrichtung des nahen Spiegels (16; 116; 120) nach der Einstellung durch den Fahrer, um eine gewünschte rückwärtige Sichtlinie (50; 52) für den nahen Spiegel (16; 116; 120) zu gewinnen, und zum Erzeugen damit korrelierbarer Ausrichtungssignale (72) ;

c) Bestimmen der Koordinaten der Fahreraugen (27) abhängig von den Abstandssignalen (70) und den Ausrichtungssignalen (72) und dem Mittelpunkt (36; 40; 140) des entfernten Spiegels (20; 24; 124; 190) und dem reflektierten Sichtlinienvektor (52; 54; r), Modellieren der Fahreraugen als Zyklopenauge, das im Fahrerkopf an einem Punkt angeordnet ist, um den sich der Kopf des Fahrers dreht, wenn der Fahrer in den nahen Spiegel (16; 116; 120; 216; 316) blickt;

d) Bestimmen der gewünschten Ausrichtung des entfernten Spiegels (20; 24; 124; 190) abhängig von den Koordinaten der Fahreraugen (27) und bekannten Sicht- und Fahrzeugparametern; und

e) Einstellen des entfernten Spiegels (20; 24; 124; 190) auf die gewünschte Ausrichtung.

20. Einrichtung zum Einstellen der Sicht nach hinten an einem Fahrzeug, das einen Fahrersitz aufweist, umfassend:

a) einen ersten nahen Spiegel (116), der am Fahrzeug an einem ersten Ort benachbart zum Fahrersitz montiert ist, so dass ihn der Fahrer im Sitzen von Hand einstellen kann;

b) einen zweiten nahen Spiegel (120), der an einem zweiten Ort mit Abstand zum ersten Ort benachbart zum Fahrersitz montiert ist, so dass ihn der Fahrer im Sitzen von Hand einstellen kann;

c) mindestens einen entfernten Spiegel (124; 190), der an der Fahrzeugaußenseite an einem vom Fahrersitz entfernten Ort angebracht ist;

d) eine erste Vorrichtung zum Erfassen der Ausrichtung (144), die funktional mit dem ersten nahen Spiegel (116) verbunden ist, und die die Ausrichtung des ersten nahen Spiegels (116) nach der Einstellung durch den Fahrer erfasst und erste damit korrelierbare Ausrichtungssignale erzeugt;

e) eine zweite Vorrichtung zum Erfassen der Ausrichtung (145), die funktional mit dem zweiten nahen Spiegel (120) verbunden ist, und die die Ausrichtung des zweiten nahen Spiegels (120) nach der Einstellung durch den Fahrer erfasst und zweite damit korrelierbare Ausrichtungssignale erzeugt;

f) eine Steuervorrichtung (162), die elektronisch mit der ersten Vorrichtung zum Erfassen der Ausrichtung (144) und der zweiten Vorrichtung zum Erfassen der Ausrichtung (145) verbunden ist und eine gewünschte Ausrichtung des entfernten Spiegels (124; 190) abhängig von den ersten Ausrichtungssignalen und den zweiten Ausrichtungssignalen und bekannten Fahrzeugparametern und Sichtparametern bestimmt und damit korrelierbare Steuersignale erzeugt, und die Fahreraugen (27) als Zyklopenauge modelliert, das an einem Punkt im Kopf des Fahrers angeordnet ist, um den sich der Fahrerkopf dreht, wenn der Fahrer in den ersten nahen Spiegel (116) und den zweiten nahen Spiegel (120) blickt; und

g) eine Spiegelpositioniervorrichtung (125), die auf Steuersignale anspricht und den entfernten Spiegel (140; 190) in der gewünschten Ausrichtung anordnet.

21. Verfahren zum automatischen Einstellen der Ausrichtung mindestens eines entfernten motorisch eingestellten Spiegels (124; 190), der in einem Fahrzeug montiert ist, das einen ersten nahen Spiegel (116) aufweist, den der Fahrzeuglenker von Hand einstellen kann, und einen vom ersten nahen Spiegel entfernten zweiten nahen Spiegel (120), den der Fahrer von Hand einstellen kann, wobei der entfernte Spiegel (124; 190) einen Mittelpunkt (140) mit bekannten Koordinaten hat und um einen ausgewählten Drehpunkt drehbar ist, und das Verfahren dem Fahrer ermöglicht, eine vorgewählte reflektierte Sichtlinie (54; r) im entfernten Spiegel (124; 190) zu erhalten, die durch einen reflektierten Sichtlinienvektor (54; r) bestimmt ist, der den entfernten Spiegel (124; 190) im Mittelpunkt (140) schneidet, umfassend die Schritte:

a) das Erfassen der Ausrichtung des ersten nahen Spiegels (116) nach der Einstellung durch den Fahrer, um eine gewünschte rückwärtige Sichtlinie (50) für den ersten nahen Spiegel (116) zu gewinnen, und das Erzeugen damit korrelierbarer erster Ausrichtungssignale;

b) das Erfassen der Ausrichtung des zweiten nahen Spiegels (120) nach der Einstellung durch den Fahrer, um eine gewünschte rückwärtige Sichtlinie (52) für den zweiten nahen Spiegel (120) zu gewinnen, und das Erzeugen damit korrelierbarer zweiter Ausrichtungssignale;

c) das Bestimmen der Koordinaten der Fahreraugen (27) abhängig von den ersten Ausrichtungssignalen und den zweiten Ausrichtungssignalen und dem Mittelpunkt (140) des entfernten Spiegels (124; 190) und dem reflektierten Sichtlinienvektor (54; r), das Modellieren der Fahreraugen (27) als Zyklopenauge, das im Fahrerkopf an einem Punkt angeordnet ist, um den sich der Kopf des Fahrers dreht, wenn er in den ersten nahen Spiegel (116) und den zweiten nahen Spiegel (120) blickt;

d) das Bestimmen der gewünschten Ausrichtung des entfernten Spiegels (124; 190) abhängig von den Koordinaten der Fahreraugen (27) und von bekannten Sicht- und Fahrzeugparametern; und

e) Einstellen des entfernten Spiegels (124; 190) auf die gewünschte Ausrichtung.

22. Motorfahrzeug-Spiegelsystem zum automatischen Einstellen der Seitenspiegel (220; 224; 290) abhängig von der Einstellung des zentralen Innenspiegels (216), damit die auf dem Fahrersitz eines Motorfahrzeugs sitzende Person (12) eine vorgeschriebene seitliche Sicht nach hinten hat, wobei das Spiegelsystem umfasst:

einen zentralen Innenspiegel (216), der so aufgebaut und gestaltet ist, dass ihn die auf dem Fahrersitz eines Motorfahrzeugs sitzende Person (12) für die zentrale Sicht nach hinten ausrichten kann;

an den gegenüberliegenden Außenseiten des Motorfahrzeugs angebrachte Seitenspiegel (220; 224; 290), die an den gegenüberliegenden Seiten des Motorfahrzeugs für die Sicht nach hinten einstellbar sind;

einen Ausrichtungserfasser (244), der funktional mit dem Zentralspiegel (216) verbunden und so aufgebaut und gestaltet ist, dass er die Ausrichtung des Zentralspiegels (216) erkennt und elektrische Signale erzeugt, die die erfasst Ausrichtung des Spiegels (216) angeben;

einen elektronischen Controller (262), der elektrisch mit dem Ausrichtungserfasser (244) verbunden ist und verwendet: i) einen angenommenen Abstand zwischen einem Mittelpunkt (230) des Zentralspiegels (216) und einer gedachten Ebene (51), die bezüglich des Motorfahrzeugs in Längsrichtung verläuft und durch das Zyklopenauge geht, das sich in einem einzigen Punkt im Kopf der im Fahrersitz sitzenden Person befindet, um den sich der Kopf der Person dreht, wenn sie in den Zentralspiegel (216) und die Seitenspiegel (220; 224; 290) blickt, und ii) die elektrischen Signale, die der Ausrichtungserfasser (244) erzeugt, und damit einen dreidimensionalen Ort für das Zyklopenauge annähert, wobei der elektronische Controller Controllerausgangssignale erzeugt, die auf dem angenäherten dreidimensionalen Ort des Zyklopenauges beruhen; und

elektrisch betätigte Motormechanismen (221; 225), die jeweils mit einem entsprechenden Seitenspiegel (220; 224; 290) verbunden sind, wobei die Motormechanismen (221; 225) auf die Controllerausgangssignale ansprechen und die Seitenspiegel (220; 224; 290) so ausrichten, dass eine Person (12) auf dem Fahrersitz auf gegenüberliegenden Seiten des Fahrzeugs einen seitlichen Blick nach hinten hat, und zwar abhängig vom angenäherten Ort des Zyklopenauges, um den sich der Kopf der Person auf dem Fahrersitz dreht, und die Motormechanismen (221; 225) die Seitenspiegel (220; 224; 290) so ausrichten, dass sie vorgeschriebene seitliche Lichtstrahlen hin zum Zyklopenauge reflektieren, das sich im Kopf der Person auf dem Fahrersitz befindet, damit die seitlichen Lichtstrahlen von hinten sichtbar sind, wenn die Person auf dem Fahrersitz den Kopf zum Blick in die Seitenspiegel (220; 224; 290) dreht.

23. Spiegelsystem nach Anspruch 22, wobei man von der gedachten Ebene (51), die in der Längsrichtung verläuft und durch das Zyklopenauge im Kopf der Person auf dem Fahrersitz geht, voraussetzt, dass sie mit einer gedachten Ebene (51) zusammenfällt, die in der Längsrichtung verläuft und durch den Mittelpunkt des Fahrersitzes geht, so dass der angenommene Abstand als Entfernung zwischen dem Mittelpunkt (230) des Zentralspiegels (216) und der gedachten Ebene (51) genommen wird, die in der Längsrichtung verläuft und durch den Mittelpunkt des Fahrersitzes geht.

24. Verfahren zum Betreiben eines Motorfahrzeug-Spiegelsystems, das die Seitenspiegel (220; 224; 290) abhängig von der Einstellung eines zentralen Innenspiegels (216) automatisch einstellt, umfassend:

das Ausrichten eines beweglichen Zentralspiegels (216), damit die Person (12) auf dem Fahrersitz eines Motorfahrzeugs eine zentrale Sicht nach hinten hat, so dass ein gewünschter zentraler Lichtstrahl von hinten, der am Zentralspiegel (216) reflektiert wird, auf die Augen (27) der auf dem Fahrersitz sitzenden Person (12) gerichtet ist und auf ein Zyklopenauge, das sich in einem Drehpunkt hinter den Augen befindet, um den sich der Kopf der Person dreht, wenn sie in den Zentralspiegel (216) und die Seitenspiegel (220; 224; 290) blickt;
das Erfassen der Ausrichtung des Zentralspiegels (216) ;
das Erzeugen elektrischer Ausrichtungssignale, die die erfasst Ausrichtung des beweglichen Zentralspiegels (216) angeben;
das Verwenden der elektrischen Ausrichtungssignale zum Bestimmen der Richtung eines Vektors normal zu einer Oberfläche des Zentralspiegels (216) ;

das Verwenden i) eines vorbestimmten reflektierten Sichtlinienvektors, der von einem Mittelpunkt (230) des Zentralspiegels (216) ausgeht und entlang eines vorgewählten optischen Pfads verläuft, für die zentrale Sicht der auf dem Fahrersitz sitzenden Person (12) nach hinten, und ii) des Vektors normal zur Oberfläche des Zentralspiegels (216), und iii) einer angenommenen seitlichen Lage des Zyklopenauges im Kopf der auf dem Fahrersitz sitzenden Person zum Ableiten einer angenäherten Länge und Richtung eines Vektors, der zwischen dem Zyklopenauge im Kopf der auf dem Fahrersitz sitzenden Person und dem Mittelpunkt (230) des Zentralspiegels (216) verläuft, um den angenäherten Ort des Zyklopenauges zu bestimmen;
das Erzeugen von Steuersignalen abhängig vom bestimmten Ort des Zyklopenauges;
das automatische Ausrichten der Seitenspiegel (220; 224; 290), so dass die Person (12) auf dem Fahrersitz zu beiden Seiten des Motorfahrzeugs Sicht nach hinten hat, wobei der bestimmte angenäherte Ort des Zyklopenauges und die Steuersignale verwendet werden, und die Seitenspiegel (220; 224; 290) so ausgerichtet sind, dass sie vorgeschriebene seitliche Lichtstrahlen zum Zyklopenauge reflektieren, damit seitliche Lichtstrahlen von hinten sichtbar sind, wenn die Person auf dem Fahrersitz den Kopf zum Blick in die Seitenspiegel (220; 224; 290) dreht.

25. Verfahren zum Betreiben eines Spiegelsystems für ein Motorfahrzeug nach Anspruch 24, wobei der Schritt des Verwendens der bestimmten angenäherten Lage des Zyklopenauges während des Schritts der automatischen Ausrichtung der Seitenspiegel (220; 224; 290) umfasst:
das Bestimmen einer angenäherten Richtung von Vektoren, die zwischen dem Zyklopenauge und einem Mittelpunkt (236; 240) eines jeden Seitenspiegels (220; 224; 290) verlaufen; und das Verwenden i) der Vektoren, die näherungsweise zwischen dem Zyklopenauge und einem Mittelpunkt (236; 240) eines jeden Seitenspiegels (220; 224; 290) verlaufen, und ii) vorbestimmter reflektierter Sichtlinienvektoren, die jeweils von einem Mittelpunkt (236; 240) eines der Seitenspiegel (220; 224; 290) ausgehen und entlang eines vorgewählten optischen Pfads verlaufen, damit die Person (12) auf dem Fahrersitz seitliche Sicht nach hinten hat, zum Ableiten entsprechender Vektorrichtungen normal zu den jeweiligen Oberflächen der Seitenspiegel (220; 224; 290), und das Verwenden der Vektorrichtungen normal zu den jeweiligen Oberflächen der Seitenspiegel (220; 224; 290) zum Ableiten der Ausrichtung der Seitenspiegel (220; 224; 290), damit die Person (12) auf dem Fahrersitz zu beiden Seiten des Motorfahrzeugs Sicht nach hinten hat.

## Revendications

1. Dispositif pour régler automatiquement l'orientation d'au moins un miroir distant (20 ; 24 ; 124 ; 190 ; 220 ; 224 ; 290) situé sur un véhicule comportant au moins un miroir proche (16 ; 116 ; 120 ; 216) situé près du siège d'un conducteur, de façon à être manuellement réglable par un conducteur lorsqu'il est assis dans une position de conduite dans le siège du conducteur, comprenant :

    (a) des moyens de détection d'orientation (44 ; 144 ; 145 ; 244) fonctionnellement couplés à au moins un miroir proche (16 ; 116 ; 120 ; 216) pour détecter l'orientation courante du (des) miroir(s) proche(s) (16 ; 116 ; 120 ; 216) après réglage par le conducteur et générer des signaux d'orientation (72) pouvant être corrélés avec celle-ci ;
    (b) des moyens de commande (62 ; 162 ; 262) fonctionnellement couplés aux moyens de détection d'orientation (44 ; 144 ; 145 ; 244) pour déterminer l'emplacement courant d'un oeil de cyclope localisé en un point situé à l'intérieur de la tête du conducteur autour duquel pivote la tête du conducteur observant les miroirs (20 ; 24 ; 124 ; 190 ; 220 ; 224 ; 290 ; 16 ; 116 ; 120 ; 216) en se basant sur les signaux d'orientation (72) et des paramètres connus et pour déterminer une orientation désirée du (des) miroir(s) distant(s) (20 ; 24 ; 124 ; 190 ; 220 ; 224 ; 290), en se basant sur l'emplacement courant de l'oeil de cyclope et pour générer des signaux de commande (78 ; 79) pouvant être corrélés avec celle-ci ; et
    (c) des moyens de positionnement de miroir (21 ; 25 ; 121 ; 125 ; 225) répondant aux signaux de commande (78 ; 79) pour positionner le(s) miroir(s) distant(s) (20 ; 24 ; 124 ; 190 ; 220 ; 224 ; 290), dans l'orientation désirée.

2. Dispositif selon la revendication 1, dans lequel les moyens de détection d'orientation comprennent un détecteur de position (44 ; 144 ; 145 ; 244) couplé au(x) miroir(s) proche(s) (16 ; 116 ; 120 ; 216).

3. Dispositif selon la revendication 1, comprenant également des moyens d'activation (46 ; 146 ; 246) pouvant être actionnés par le conducteur pour activer les moyens de détection d'orientation (44 ; 144 ; 145 ; 244) et les moyens de commande (62 ; 162 ; 262).

4. Dispositif selon la revendication 3, dans lequel les moyens d'activation comprennent un commutateur actionné manuellement (46 ; 146 ; 246), situé de manière adjacente au miroir proche (16 ; 116 ; 120 ; 216).

5. Dispositif selon la revendication 1, dans lequel le(s) miroir(s) proche(s) comprend (comprennent) un miroir intérieur central (16 ; 116 ; 216) et le(s) miroir(s) distant(s) comprend (comprennent) un miroir situé du côté du passager (24 ; 124 ; 190 ; 224 ; 290) à l'extérieur du véhicule.

6. Dispositif selon la revendication 1, dans lequel les moyens de positionnement de miroir comprennent un servomécanisme (21 ; 25 ; 121 ; 125 ; 225) couplé au miroir distant (20 ; 24 ; 124 ; 190 ; 220 ; 224 ; 290).

7. Dispositif selon la revendication 6, dans lequel le servomécanisme (21 ; 25 ; 121 ; 125 ; 225) comprend au moins un moteur électrique et des moyens de réinjection pour fournir des signaux de réinjection (76 ; 77) aux moyens de commande (62 ; 162 ; 262) pouvant être corrélés avec l'orientation courante du miroir distant (20 ; 24 ; 124 ; 190 ; 220 ; 224 ; 290).

8. Dispositif selon la revendication 1, comprenant également des moyens de détection (42) pour détecter la distance entre le miroir proche (16) et la tête du conducteur (28) et générer des signaux de distance (70) pouvant être corrélés avec ladite distance, lesdits moyens de commande (62) utilisant les signaux de distance (70) pour déterminer l'emplacement courant de l'oeil de cyclope.

9. Dispositif selon la revendication 1, dans lequel le(s) miroir(s) proche(s) comprend (comprennent) un miroir intérieur central (116) et un miroir extérieur du côté du conducteur (120) situé du côté du conducteur à l'extérieur du véhicule et le(s) miroir(s) distant(s) comprend (comprennent) un miroir du côté du passager (124 ; 190) situé à l'extérieur du véhicule.

10. Dispositif selon la revendication 1, dans lequel les moyens de commande (262) déterminent l'emplacement courant de l'oeil de cyclope en fonction de a) un plan vertical imaginaire (51) s'étendant à travers le siège du conducteur et longitudinalement par rapport au véhicule, et b) les signaux d'orientation (72).

11. Dispositif selon la revendication 1, dans lequel les moyens de commande (62 ; 162 ; 262) comprennent un micro-ordinateur (63) comportant des moyens de stockage (65 ; 67) pour stocker les paramètres connus du véhicule et les paramètres de vision, des moyens d'entrée pour recevoir les signaux d'orientation (72), des moyens de traitement pour générer des signaux de commande (78 ; 79) en se basant sur les signaux d'orientation (72) et les paramètres et des moyens de sortie pour délivrer en sortie les signaux de commande (78 ; 79) aux moyens de positionnement de miroir (21 ; 25 ; 121 ; 125 ; 225).

12. Dispositif selon la revendication 11, dans lequel les moyens de traitement comprennent :

   (a) des moyens pour déterminer un vecteur de ligne de visée directe (34 ; 38 ; d) s'étendant à partir de l'emplacement de l'oeil de cyclope jusqu'au point central (36 ; 40 ; 140 ; 236 ; 240) du miroir distant (20, 24 ; 124 ; 190 ; 220 ; 224 ; 290) ;

   (b) des moyens pour déterminer un plan de ligne de visée formée par le vecteur de ligne de visée directe (34 ; 38 ; d) et un vecteur de ligne de visée réfléchie désirée (52 ; 54, r) se coupant au point central (36 ; 40 ; 140 ; 236 ; 240) du miroir distant (20, 24 ; 124 ; 190 ; 220 ; 224 ; 290) ; et

   (c) des moyens pour déterminer l'orientation désirée du miroir en déterminant un vecteur de bissection (58, 60) effectuant la bissection de l'angle (B, C) formé par le vecteur de ligne de visée directe (34 ; 38 ; d) et le vecteur de ligne de visée réfléchie (52 ; 54 ; r) se coupant au point central (36 ; 40 ; 140 ; 236 ; 240) du miroir distant (20, 24, 124 ; 190 ; 220 ; 224 ; 290) sur le plan de ligne de visée.

13. Système de miroirs pour véhicule à moteur comprenant :

   (a) un miroir central (16 ; 116 ; 216) construit et agencé de manière à être orienté manuellement par l'occupant du siège du conducteur d'un véhicule à moteur pour une visibilité de rétrovision centrale optimale ;

   (b) un détecteur d'orientation (44 ; 144 ; 244) raccordé audit miroir central manuellement mobile (16 ; 116 ; 216) et construit et agencé de manière à détecter l'orientation orientée manuellement dudit miroir central (16 ; 116 ; 216) et pour générer des signaux d'orientation (72) indiquant l'orientation détectée dudit miroir central manuellement mobile (16 ; 116 ; 216)

   (c) un contrôleur électronique (62 ; 162 ; 262) pour recevoir lesdits signaux générés par ledit un détecteur d'orientation (44 ; 144 ; 244) raccordé audit miroir central manuellement mobile (16 ; 116 ; 216) et pour générer des signaux de sortie de contrôleur (78 ; 79) en se basant sur lesdits signaux générés par ledit détecteur d'orientation (44 ; 144 ; 244), le contrôleur comprenant un processeur (63) pour traiter les signaux d'orientation (72) et déterminer l'emplacement courant d'un oeil de cyclope, situé en un point à l'intérieur de la tête (28) de l'occupant autour duquel pivote la tête de l'occupant en observant le miroir proche (16 ; 116 ; 216) en se basant sur les signaux d'orientation (72) ;

   (d) au moins un miroir de vue latérale (20 ; 24 ; 124 ; 190 ; 220 ; 224 ; 290) disposé à l'extérieur du véhicule à moteur et réglable pour la visibilité par rétrovision le long d'un côté du véhicule à moteur ; et

   (e) un mécanisme à moteur actionné électriquement (21, 25 ; 125 ; 221 ; 225) associé audit miroir de vue latérale (20 ; 24 ; 124 ; 190 ; 220 ; 224 ; 290), ledit mécanisme à moteur (21, 25 ; 125 ; 221 ; 225) pouvant être actionné en réponse auxdits signaux de sortie du contrôleur (78, 79) et étant construit et agencé de manière à orienter automatiquement ledit miroir de vue latérale (20 ; 24 ; 124 ; 190 ; 220 ; 290) pour la visibilité de rétrovision par l'occupant du siège du conducteur en se basant sur lesdits signaux de sortie du contrôleur (78 ; 79).

14. Procédé pour régler automatiquement l'orientation du (des) miroir(s) distant(s) (20 ; 24 ; 124 ; 190 ; 220 ; 224 ; 290) situé(s) sur un véhicule comportant au moins un miroir proche (16 ; 116 ; 120 ; 216) situé près du siège du conducteur, de façon à être manuellement réglable par un conducteur lorsqu'il est assis dans une position de conduite dans le siège du conducteur, comprenant :

   (a) la détection d'une orientation courante du (des) miroir(s) proche(s) (16 ; 116 ; 120 ; 216) après réglage par le conducteur et la génération de signaux d'orientation (72) pouvant être corrélés avec celle-ci ;

   (b) la détermination de l'emplacement courant d'un oeil de cyclope situé en un point à l'intérieur de la tête du conducteur (28) autour duquel pivote la tête du conducteur en observant le miroir proche (16 ; 116 ; 120 ; 216), en se basant sur les signaux d'orientation (72) et les paramètres du véhicule connus et les paramètres de vision ;

   (c) la détermination d'une orientation désirée du (des) miroir(s) distant(s) (20 ; 24 ; 124 ; 190 ; 220 ; 224 ; 290) en se basant sur l'emplacement courant de l'oeil de cyclope et la génération de signaux de commande (78, 79) pouvant être corrélés avec celle-ci ; et

   (d) le positionnement du (des) miroir(s) distant(s) (20 ; 24 ; 124 ; 190 ; 220 ; 224 ; 290) dans l'orientation désirée.

15. Dispositif pour régler automatiquement l'orientation d'au moins un miroir distant (20 ; 24) situé sur un véhicule comportant un miroir proche (16 ; 116) situé près du siège du conducteur de façon à pouvoir être réglé manuellement par un conducteur lorsqu'il est assis dans une position de conduite dans le siège du conducteur, comprenant :

(a) des moyens de détection de distance pour détecter la distance entre le miroir proche (16) et les yeux du conducteur (27) et générer des signaux de distance (70) pouvant être corrélés avec celle-ci, comprenant un détecteur de distance (42) monté de manière adjacente au miroir proche (16) ;

(b) des moyens de détection d'orientation fonctionnellement couplés au miroir proche (16) pour détecter l'orientation du miroir proche (16) après réglage par le conducteur et générer des signaux d'orientation (72) pouvant être corrélés avec celle-ci, comprenant un détecteur d'orientation (44) couplé au miroir proche (16) ;

(c) des moyens de commande (62) pouvant être actionnés pour modéliser les yeux du conducteur (27) comme étant un oeil de cyclope situé en un point à l'intérieur de la tête du conducteur autour duquel pivote la tête du conducteur en observant le miroir proche (16) et répondant au détecteur de distance (42) et au détecteur d'orientation (44) pour déterminer l'orientation désirée du miroir distant (20, 24) en se basant sur les signaux de distance (70) et les signaux d'orientation (72) et des paramètres connus du véhicule et des paramètres de vision et pour générer des signaux de commande (78, 79) pouvant être corrélés avec ladite orientation ; et

(d) des moyens de positionnement de miroir (21, 25) répondant aux signaux de commande (78, 79) pour positionner le miroir distant (20, 24) dans l'orientation désirée.

**16.** Dispositif selon la revendication 15, dans lequel les moyens de commande (62) comprennent un processeur d'ordinateur (63) pour exécuter la modélisation.

**17.** Dispositif selon la revendication 15, dans lequel les moyens de détection de distance (42) comprennent un détecteur à infrarouges.

**18.** Dispositif selon la revendication 15, dans lequel les moyens de détection de distance (42) comprennent un détecteur à ultrasons.

**19.** Procédé pour régler automatiquement l'orientation d'au moins un miroir distant réglé de façon motorisée (20 ; 24 ; 124 ; 190) monté dans un véhicule comportant un miroir proche (16 ; 116 ; 120) réglable manuellement par le conducteur du véhicule, le miroir distant (20 ; 24 ; 124 ; 190) ayant un point central (36 ; 40 ; 140) de coordonnées connues et pouvant tourner autour d'un point de rotation sélectionné, le procédé permettant au conducteur d'obtenir une ligne de visée réfléchie sélectionnée à l'avance (52 ; 54 ; r) dans le miroir distant (20 ; 24 ; 124 ; 190) définie par un vecteur de ligne de visée réfléchie (52 ; 54 ; r) coupant le miroir distant au point central (36 ; 40 ; 140), comprenant les étapes consistant à :

(a) détecter la distance entre le miroir proche (16 ; 116 ; 120) et les yeux du conducteur (27) et générer des signaux de distance (70) pouvant être corrélés avec celle-ci ;

(b) détecter l'orientation du miroir proche (16 ; 116 ; 120) après réglage par le conducteur pour obtenir une ligne de visée de rétrovision désirée (50 ; 52) pour le miroir proche (16 ; 116 ; 120) et générer des signaux d'orientation (72) pouvant être corrélés avec celle-ci ;

(c) déterminer les coordonnées des yeux (27) du conducteur en se basant sur les signaux de distance (70) et les signaux d'orientation (72) et le point central (36 ; 40 ; 140) du miroir distant (20 ; 24 ; 124 ; 190) et le vecteur de ligne de visée réfléchie (52 ; 54, r), en modélisant les yeux du conducteur comme étant un oeil de cyclope situé à l'intérieur de la tête du conducteur en un point autour duquel pivote la tête du conducteur en observant le miroir proche (16 ; 116 ; 120 ; 216 ; 316) ;

(d) déterminer l'orientation désirée du miroir distant (20 ; 24 ; 124 ; 190) en se basant sur les coordonnées des yeux (27) du conducteur et les paramètres connus de vision et du véhicule ; et

(e) positionner le miroir distant (20 ; 24 ; 124 ; 190) pour correspondre à l'orientation désirée.

**20.** Dispositif de réglage de rétrovision pour un véhicule comportant un siège de conducteur, comprenant :

(a) un premier miroir proche (116) monté sur le véhicule à un premier emplacement près du siège du conducteur, de façon à pouvoir être réglé manuellement par un conducteur lorsqu'il est dans la position assise ;

(b) un deuxième miroir proche (120) monté à un deuxième emplacement près du siège du véhicule, espacé du premier emplacement, de façon à pouvoir être manuellement réglable par le conducteur lorsqu'il est dans la position assise ;

(c) au moins un miroir distant (124 ; 190) situé à l'extérieur du véhicule à un emplacement distant du siège du conducteur ;

(d) des premiers moyens de détection d'orientation (144) fonctionnellement couplés au premier miroir proche (116) pour détecter l'orientation du premier miroir proche (116) après réglage par le conducteur et générer des premiers signaux d'orientation pouvant être corrélés avec celle-ci ;

(e) des deuxièmes moyens de détection d'orientation (145) fonctionnellement couplés au deuxième miroir proche (120) pour détecter l'orientation du deuxième miroir proche (120) après réglage par le conducteur et générer des deuxièmes signaux d'orientation pouvant être corrélés avec celle-ci ;

(f) des moyens de commande (162) couplés de manière électronique aux premiers moyens de détection d'orientation (144) et aux deuxièmes moyens de détection d'orientation (145) pour déterminer une orientation désirée du miroir distant (124 ; 190) en se basant sur les premiers signaux d'orientation et les deuxièmes signaux d'orientation et des paramètres connus du véhicule et des paramètres de vision et pour générer des signaux de commande pouvant être corrélés avec celle-ci, en modélisant les yeux du conducteur (27) comme étant un oeil de cyclope situé en un point à l'intérieur de la tête du conducteur autour duquel pivote la tête du conducteur en observant le premier miroir proche (116) et le deuxième miroir proche (120) ;

(g) des moyens de positionnement de miroir (125) répondant aux signaux de commande pour positionner le miroir distant (140) ; 190) dans l'orientation désirée.

21. Procédé de réglage automatique de l'orientation d'au moins un miroir distant réglé de façon motorisée (124 ; 190) monté dans un véhicule comportant un premier miroir proche (116) manuellement réglable par un conducteur du véhicule et un deuxième miroir proche (120) espacé de celui-ci et manuellement réglable par le conducteur, le miroir distant (124 ; 190) ayant un point central (140) de coordonnées connues et pouvant tourner autour d'un point de rotation sélectionné, le procédé permettant au conducteur d'obtenir une ligne de visée réfléchie sélectionnée à l'avance (54 ; r) dans le miroir distant (124 ; 190) définie par un vecteur de ligne de visée réfléchie (54 ; r) coupant le miroir distant (124 ; 190) au point central (140), comprenant les étapes consistant à :

(a) détecter l'orientation du premier miroir proche (116) après réglage par le conducteur pour obtenir une ligne de visée de rétrovision désirée (50) pour le premier miroir proche (116) et générer des premiers signaux d'orientation pouvant être corrélés avec celle-ci ;

(b) détecter l'orientation du deuxième miroir proche (120) après réglage par le conducteur pour obtenir une deuxième ligne de visée de rétrovision désirée (52) pour le deuxième miroir proche (120) et générer des deuxièmes signaux d'orientation pouvant être corrélés avec celle-ci ;

(c) déterminer les coordonnées des yeux (27) du conducteur en se basant sur les premiers signaux d'orientation et les deuxièmes signaux d'orientation et le point central (140) du miroir distant (124 ; 190) et le vecteur de ligne de visée réfléchie (54, r), en modélisant les yeux du conducteur (27) comme étant un oeil de cyclope situé en un point à l'intérieur de la tête du conducteur autour duquel pivote la tête du conducteur en observant le premier miroir proche (116) et le deuxième miroir proche (120) ;

(d) déterminer l'orientation désirée du miroir distant (124 ; 190) en se basant sur les coordonnées des yeux (27) du conducteur et les paramètres connus de vision et du véhicule ; et

(e) positionner le miroir distant (124 ; 190) pour correspondre à l'orientation désirée.

22. Système de miroirs de véhicules à moteur pour régler automatiquement des miroirs de vision latérale (220 ; 224 ; 290) pour la visibilité de rétrovision latérale prescrite de l'occupant du siège du conducteur d'un véhicule à moteur (12) en se basant sur le réglage d'un miroir intérieur central (216), ledit système de miroir comprenant :

un miroir intérieur central (216) construit et agencé de manière à être orienté par l'occupant du siège du conducteur d'un véhicule à moteur (12) pour la visibilité de rétrovision centrale ;

des miroirs de vision latérale (220 ; 224 ; 290) disposés sur les côtés extérieurs opposés du véhicule à moteur et réglables pour la visibilité de rétrovision sur les côtés opposés du véhicule à moteur ;

un détecteur d'orientation (244) fonctionnellement raccordé audit miroir central (216) et construit et agencé de manière à détecter l'orientation dudit miroir central (216) et pour générer des signaux électriques indiquant l'orientation détectée dudit miroir (216) ;

un contrôleur électronique (262) électriquement connecté audit détecteur d'orientation (244) pour utiliser (i) une distance supposée entre un point central (230) du miroir central (216) et un plan imaginaire (51) s'étendant dans une direction longitudinale par rapport au véhicule à moteur et traversant un oeil de cyclope situé en un point unique à l'intérieur de la tête de l'occupant du siège du conducteur autour duquel pivote la tête de l'occupant pour observer ledit miroir central (216) et lesdits miroirs de vision latérale (220 ; 224 ; 290), et (ii) lesdits signaux électriques générés par ledit détecteur d'orientation (244) pour approcher un emplacement tridimensionnel pour ledit oeil de cyclope, ledit contrôleur électronique générant des signaux de sortie de contrôleur en se basant sur ledit emplacement tridimensionnel approché dudit oeil de cyclope ; et

des mécanismes à moteur actionnés électriquement (221 ; 225) raccordés chacun à un miroir respectif desdits miroirs de vision latérale (220 ; 224 ; 290), lesdits mécanismes à moteur (221 ; 225) répondant auxdits signaux de sortie du contrôleur pour orienter lesdits miroirs de vision latérale (220 ; 224 ; 290) pour la visibilité de rétrovision latérale par ledit occupant du siège du conducteur (12) sur les côtés opposés du véhicule à moteur en se basant sur ledit emplacement approché dudit oeil de cyclope autour duquel pivote la tête de l'occupant du siège du conducteur, lesdits mécanismes à moteur (221 ; 225) orientant lesdits miroirs de vision latérale (220 ; 224 ; 290) pour réfléchir lesdits rayons de lumière de rétrovision latérale prescrits vers ledit oeil de cyclope à l'intérieur de la tête de l'occupant du siège du conducteur pour permettre la rétrovision latérale desdits rayons de lumière lorsque la tête de l'occupant du siège du conducteur pivote de manière à observer lesdits miroirs de vision latérale (220 ; 224 ; 290).

23. Système de miroirs selon la revendication 22, dans lequel ledit plan imaginaire (51) s'étendant dans ladite direction longitudinale et traversant ledit oeil de cyclope à l'intérieur de la tête de l'occupant du siège du conducteur est supposé coïncider avec un plan imaginaire (51) s'étendant dans ladite direction longitudinale et traversant le centre du siège du conducteur, de façon que ladite distance supposée soit prise comme la distance entre le point central (230) du miroir central (216) et le plan imaginaire (51) s'étendant dans ladite direction longitudinale et traversant le centre du siège du conducteur.

24. Procédé pour actionner un système de miroirs de véhicule à moteur qui règle automatiquement des miroirs de vision latérale (220 ; 224 ; 290) en se basant sur le réglage d'un miroir intérieur central (216), ledit procédé comprenant :

l'orientation d'un miroir central mobile (216) pour la visibilité de rétrovision centrale par l'occupant du siège du conducteur d'un véhicule à moteur (12) de façon qu'un rayon de lumière de rétrovision centrale désiré réfléchi par le miroir central (216) soit dirigé vers les yeux de l'occupant du siège du conducteur (12) et vers un oeil de cyclope situé en un point de pivotement situé derrière les yeux autour duquel pivote la tête de l'occupant pour observer le miroir central (216) et les miroirs de vision latérale (220 ; 224 ; 290) ;

la détection de l'orientation dudit miroir central (216) ;

la génération de signaux électriques d'orientation indiquant l'orientation détectée dudit miroir central mobile (216) ;

l'utilisation desdits signaux électriques d'orientation pour déterminer la direction d'un vecteur normal à la surface dudit miroir central (216) ;

l'utilisation i) d'un vecteur prédéterminé de ligne de visée réfléchie s'étendant depuis le point central (230) du miroir central (216) le long d'un chemin optique sélectionné à l'avance pour la visibilité de rétrovision centrale par l'occupant du siège du conducteur (12), et ii) ledit vecteur normal à la surface dudit miroir central (216), et iii) une position latérale supposée dudit oeil de cyclope de la tête de l'occupant du siège du conducteur pour déterminer une longueur et une direction approchées d'un vecteur s'étendant entre ledit oeil de cyclope de la tête de l'occupant du siège du conducteur et le point central (230) du miroir central (216) de façon à déterminer l'emplacement approché dudit oeil de cyclope ;

la génération de signaux de commande basés sur l'emplacement déterminé dudit oeil de cyclope ;

l'orientation automatique des miroirs de vision latérale (220 ; 224 ; 290) pour la visibilité de rétrovision par l'occupant du siège du conducteur (12) sur les côtés opposés du moteur du véhicule, en utilisant l'emplacement approché déterminé dudit oeil de cyclope et en se basant sur lesdits signaux de commande, lesdits miroirs de vision latérale (220 ; 224 ; 290) étant orientés de manière à réfléchir les rayons de lumière de vision latérale prescrits vers ledit oeil de cyclope pour permettre la rétrovision latérale des rayons de lumière lorsque la tête de l'occupant du siège du conducteur pivote de manière à observer lesdits miroirs de vision latérale (220 ; 224 ; 290).

25. Procédé pour actionner un système de miroirs pour un véhicule à moteur selon la revendication 24, dans lequel l'étape d'utilisation de l'emplacement approché déterminé dudit oeil de cyclope pour exécuter l'étape d'orientation automatique desdits miroirs de vision latérale (220 ; 224 ; 290) comprend :
la détermination d'une direction approchée du vecteur s'étendant entre ledit oeil de cyclope et un point central (236 ; 240) de chacun desdits miroirs de vision latérale (220 ; 224 ; 290 ; et l'utilisation i) desdits vecteur s'étendant approximativement entre ledit oeil de cyclope et un point central (236 ; 240) de chacun desdits miroirs de vision latérale (220 ; 224 ; 290), et ii) de vecteurs de ligne de visée réfléchie prédéterminée s'étendant chacun respectivement à partir d'un point central (236 ; 240) de l'un desdits miroirs de vision latérale (220 ; 224 ; 290) le long d'un chemin optique sélectionné à l'avance pour la visibilité de rétrovision latérale par l'occupant du siège du conducteur (12) pour déterminer des directions de vecteurs respectives normales aux surfaces respectives desdits miroirs de vision latérale (220 ; 224 ; 290), et l'utilisation desdites directions de vecteurs normales aux surfaces respectives desdits miroirs de vision latérale (220 ; 224 ; 290) pour déterminer ladite orientation desdits miroirs de vision latérale (220 ; 224 ; 290) pour la visibilité de rétrovision par l'occupant du siège du véhicule (12) sur les côtés opposés du véhicule à moteur.

Figure 1

EP 0 793 585 B1

Figure 2

Start

switch
triggered? — 80

Yes

determination of
distance from central
mirror to driver's eyes — 82

determination of central
mirror orientation — 84

determination of unit
vector normal to central
mirror — 86

determination of
driver's eyes position — 88

calculation of normal
unit vector to mirrors
to be positioned — 90

calculation of new
orientations for mirrors
to be positioned — 92

implementation of new
orientations for mirrors
to be positioned — 94

**Figure 3**

Figure 4

EP 0 793 585 B1

Figure 5

Figure 6

EP 0 793 585 B1

Figure 7

**Figure 8**

**Figure 9**